# EUROPEAN PATENT APPLICATION

(11) **EP 4 080 260 A1**
(43) Date of publication of application: **26.10.2022**
(21) Application number: 21170265.9
(22) Date of filing: 23.04.2021
(51) Int. Cl.: G02B 6/44

(54) **OPTICAL FIBRE ROUTING AND ENCLOSURES FOR FIBRE CABLES**

(71) Applicant: Keltech Network Innovations Limited, D2 Dublin (IE)
(72) Inventor: Botha, Jacob, Milton Keynes, MK430HH (GB); Kellett, Mark, Dublin, D2 (IE)
(74) Representative: FRKelly

(57) **Abstract**

A fibre routing structure is disclosed for routing and terminating optical fibres within an enclosure, having a number of fibre routing trays which receive and guide a fibre across a surface of the tray from an entry point to an exit point, and at least one fibre routing tray has a mounting point for a fibre termination component. The fibre routing trays are mounted in a stacked configuration on a tray support member which routes fibres between the fibre routing trays. The fibre routing trays extend from the tray support member in cantilevered fashion and at least one fibre routing tray is hingedly mounted to the tray support member permitting it to be pivoted away from an adjacent underlying tray to reveal and provide access to the adjacent underlying tray and permitting it to be pivoted back to lie parallel to the adjacent underlying tray. This provides compact storage accommodating large number of fibre connections and terminations with ease of access to the stacked trays.

## Description

### Technical Field

This invention relates to optical fibre routing and termination, and to enclosures for routing and terminating optical fibre cables, including hybrid power and fibre cables.

Termination, as used herein, encompasses connections, terminations, splices and splits.

As used herein, hybrid power and fibre cables denote cables of the type also known as "hybrid copper and fibre", i.e. having one or more optical fibres, and one or more powered conductors carried together in a common sheath. While the powered conductors may be referred to as "copper" it is to be understood that this is a term of art that denotes an electrical conductor and may include conductors of materials other than copper.

### Background Art

Optical fibre networks require terminating equipment, junction boxes, distribution boxes, and so on, to be located in sometimes inaccessible locations. Such equipment often requires power, and traditionally this has meant that installation of optical fibre network equipment must include the provision of electrical mains connection also, often requiring co-ordination between different utility providers. Furthermore, power failures may be outside the control of the network operator, and may not be remediable by the network operator.

As a result there is a need for hybrid power and fibre cables, and this is a growing technology. One drawback to this technology is that the terminating enclosures must accommodate both powered components and components of the optical fibre system and tend to become bulky and more expensive. Furthermore, they become more difficult to install and service as they become more complicated internally.

There is a need for improved enclosures which are less expensive to manufacture, easier to install and maintain, and which are less bulky than conventional enclosures.

For optical fibre terminations in particular, whether in the case of hybrid power and fibre cables, or for conventional optical fibre cables, there is also a need for improved routing within a termination enclosure that is less bulky, easier to install and service, and which provides a high degree of protection for the fibres.

### Disclosure of the Invention

In a first aspect, there is provided an enclosure for terminating a hybrid power and fibre cable, comprising:
a) a housing having an entry port for admitting a hybrid power and fibre cable of the type comprising at least one powered conductor and at least one optical fibre carried in a common sheath;
b) a divider plate positioned adjacent the entry port for receiving and securing said hybrid cable thereto, the divider plate having a first side and a second side, wherein the divider plate comprises:
   i) a first conduit provided on the first side of the divider plate and having a first end and a second end, the first end being proximal to the entry port and the second end being distal from the entry port, wherein the first conduit is open along its length to admit an optical fibre laid lengthwise into and along the first conduit such that the fibre is guided from the first end to the second end, the first conduit being provided with means for retaining the optical fibre within the length of the first conduit; and
   ii) an opening in the plate between the first and second sides to permit passage either of the optical fibre from the second side to the first side, or of the powered conductor from the first side to the second side, whereby the optical fibre and the powered conductor may be separated from the one another and separately routed on opposite sides of the divider plate, the divider plate defining a fibre routing space within the housing on the first side thereof and a power conductor routing space within the housing on the second side thereof.

The divider plate provides an entry system for a hybrid fibre and optical cable which enables the fibre and copper (or powered conductor) to be separately routed to different areas of the enclosure. The plate defines a division between the first side, where the fibre routing takes place, and the second side, where the powered conductor is routed to.

In this way, the installer or technician can route power away from fibre close to the entry point of the hybrid cable after separating the fibre and copper, and can work on the two sub-systems efficiently and without one interfering with the other. The provision of a conduit to carry the fibre to further routing components also provides for a controlled path, with predetermined bend radius, and as will be seen further below, enables efficient fibre storage for fibres that are not being terminated or for excess lengths of coiled fibre.

Preferably, the divider plate comprises securing means adapted to secure the hybrid power and fibre cable before the optical fibre and the powered conductor are separated from one another.

Preferably, the first conduit is a curved conduit which guides the optical fibre outwardly on the plate from a position closer to a mid-line of the plate between a pair of edges of the plate, to a peripheral position closer to one of said edges.

Preferably, the curved first conduit defines a portion of a boundary of a fibre storage area, the fibre storage area positioned inwardly of said boundary on the surface of the plate and defining a region within which a length of coiled optical fibre, continuous with a length of optical fibre disposed in the first conduit, may be accommodated and stored.

The enclosure preferably further comprises a fibre routing structure positioned relative to the first side of the divider plate to receive optical fibre from the second end of the first conduit and route the received optical fibre to a termination point.

Preferably, the fibre routing structure comprises a distribution conduit to receive optical fibre from the second end of the first conduit of the divider plate, and a plurality of fibre routing trays stacked in parallel with one another and each having a guided path positioned to receive optical fibre from the distribution conduit and guide said received optical fibre across the tray, whereby optical fibre may be selectively routed from the divider plate conduit, along the distribution conduit, to any of the fibre routing trays.

Preferably, a fibre termination device is provided on at least one of the fibre routing trays.

An enclosure according to claim 7, wherein said fibre termination device is a splicing component permitting splicing of said optical fibre to one or more other optical fibres.

Preferably, the fibre routing structure comprises a fibre routing block on which said distribution conduit is provided, the fibre routing block being disposed within the housing relative to the divider plate such that the distribution conduit carries fibre away from the plane of the divider plate at an angle of between 20 and 70 degrees.

Preferably, the fibre routing block is provided with a plurality of fibre routing tray mounting points at different heights as measured in the direction normal to the plane of the divider plate.

Preferably, said fibre routing tray mounting points are hinged connections, permitting individual trays to be flipped between a raised position in which underlying structures are revealed, and a lowered position in which the trays lie parallel to the divider plate and underlying structures are concealed.

Preferably, the fibre routing block is provided with a plurality of bridging conduits connected to the distribution conduit and extending in a direction parallel to the plane of the divider plate, such that a fibre carried in the distribution conduit may be directed selectively along any of the bridging conduits.

Preferably, a separate bridging conduit is provided at the level of each fibre routing tray, for carrying fibre from the distribution conduit to the guided path of the fibre routing tray.

Preferably, the fibre routing block is provided with at least two distribution conduits spaced apart across the width of the fibre routing block as measured in a direction parallel to the plane of the divider plate, whereby one distribution conduit may carry a fibre from the divider plate to a fibre routing tray, and the other distribution conduit may carry the same fibre or a fibre spliced to said fibre from the fibre routing tray to the divider plate.

Preferably, the routing of an optical fibre between the entry port and a termination point is along a path which at no point has a bend radius less than the minimum bend radius threshold of an individual fibre strands.

Preferably, the enclosure further comprises an exit port for admitting the same or a different hybrid power and fibre cable.

Preferably, the divider plate comprises a second conduit provided on the first side of the divider plate and also having a first end and a second end, the first end being proximal to the entry port and the second end being distal from the entry port, wherein the second conduit is open along its length to admit an optical fibre laid lengthwise into and along the second conduit such that the fibre is guided from the first end to the second end, the second conduit being provided with means for retaining the optical fibre within the length of the second conduit.

Preferably, the second conduit is a curved conduit which guides the optical fibre outwardly on the plate from a position closer to a mid-line of the plate between a pair of edges of the plate, to a peripheral position closer to one of said edges.

Preferably, the first and second conduits guide respective fibres outwardly on the plate towards opposite edges of the pair of edges

Preferably, the curved second conduit defines a portion of a boundary of a fibre storage area, the fibre storage area positioned inwardly of said boundary on the surface of the plate and defining a region within which a length of coiled optical fibre, continuous with a length of optical fibre disposed in the second conduit, may be accommodated and stored.

Preferably, the first and second curved conduits define respective portions of a boundary extending on either side of a mid-line of the plate.

Preferably, the fibre routing structure comprises a pair of distribution conduits each of which is disposed to receive optical fibre from the second end of a respective one of the first and second conduits of the divider plate, and wherein said plurality of fibre routing trays each has a guided path positioned to receive optical fibre from each distribution conduit.

Preferably, the enclosure further includes a main support member mounted within the housing, the divider plate being mounted on the main support member.

Preferably, the main support member has an anterior face and a posterior face and divides the interior space within the housing into an anterior region and a posterior region, wherein the divider plate is mounted on the anterior face in the anterior region, and wherein the main support member is provided with one or more openings adapted to permit passage of a powered conductor from the divider plate to the posterior region.

Preferably, the anterior region is provided with fibre routing structures and is adapted to receive fibre termination components, and wherein the posterior region is provided with powered conductor routing structures and is adapted to receive powered conductor termination components.

In a second, independent aspect of invention, there is provided a fibre routing structure for routing and terminating optical fibres within an enclosure, the structure comprising:
a) a plurality of fibre routing trays each provided with one or more fibre routing guides which receive and guide a fibre across a surface of the tray from an entry point to an exit point, at least one of the fibre routing trays being provided with a mounting point for a fibre termination component;
b) a tray support member on which each of the fibre routing trays is mounted, the tray support member comprising a plurality of fibre conduits providing routing paths between the fibre routing trays;
wherein the fibre routing trays are mounted on the tray support member in a stacked configuration one above the other;
wherein the fibre routing trays are mounted to the tray support member and extend therefrom in cantilevered fashion;
wherein at least one of the fibre routing trays is hingedly mounted to the tray support member permitting it to be pivoted away from an adjacent underlying tray to reveal and provide access to the adjacent underlying tray and permitting it to be pivoted back to lie parallel to the adjacent underlying tray.

The provision of hinged, cantilevered fibre routing trays, stacked one above the other and mounted on a common tray support member provides an extremely compact system for terminating large numbers of fibres in a very small volume, while also allowing free routing of fibres to trays at different levels for maximum configurability, and easy access to each level due to the hinging connection between the trays and the fixed support.

Preferably, when in a working configuration all of the trays are disposed parallel to one another and each tray is successively displaced laterally relative to the next adjacent tray, such that the trays are provided in a stepped configuration.

Preferably, the tray support member comprises a body on which the mounting attachments of the trays are disposed, wherein the mounting attachments are aligned along a plane that lies at an angle of between 20 and 70 degrees relative to the planes of the trays in the working configuration.

Preferably, the tray support member comprises a base that is parallel to the plane of the trays in the working configuration and/or a rear support that is perpendicular to the plane of the trays in a working configuration.

Preferably, each tray above the lowermost tray is hingedly mounted to the tray support, permitting it to be pivoted away from the working configuration to a routing configuration in which a user may access a lower tray to route a fibre thereon.

Preferably, the lowermost tray is hingedly mounted to the tray support, permitting it to be pivoted away from the working configuration to a routing configuration in which a user may access a region beneath the lowermost tray.

Preferably, the uppermost tray is provided with a cover to secure and protect a fibre and any termination components carried on the uppermost tray.

Preferably, each of said trays is provided with one or more mounting points for fibre terminating components.

Preferably, the fibre terminating components are selected from fibre splice connectors, fibre splice protectors, fibre optic couplers, and planar waveguide splitters.

Preferably, the system further comprises a base plate which is adapted to receive an optical fibre from an entry point and is provided with a first conduit to route the optical fibre to a fibre conduit of the tray support member.

Preferably, the base plate further comprises a second conduit to receive an optical fibre from a fibre conduit of the tray support member and to route the received optical fibre to an exit point.

Preferably, the base plate further comprises a coiled fibre storage area which is at least partly defined by the first conduit and, if present, the second conduit.

Preferably, the tray support member is mounted above the base plate, with the coiled fibre storage area being situated at least partly below the tray support member.

Preferably, at least one of the fibre splice trays is provided with means for receiving a communication device.

Preferably, the communication device is an internet of things (IOT) module.

Preferably, the communication device is received on the underside of the fibre splice tray.

Preferably, the communication device is provided with a sensor that communicates with a fibre terminating component, and with wireless communication means for communicating with a remotely located device or system outside the fibre routing system enclosure.

Preferably, the enclosure comprises a removable cover, having an internal profile that holds the fibre splice trays in position when the removable cover is fitted.

Preferably, the internal profile comprises a stepped surface defining a space for receiving one or more communication components.

In a third, independent aspect of invention there is provided an enclosure for terminating a hybrid power and fibre cable, comprising:
a) a generally cuboid housing having a pair of end faces and four side faces, the end faces having a smaller area than the side faces;
b) an entry port in an end face for admitting a hybrid power and fibre cable of the type comprising at least one powered conductor and at least one optical fibre carried in a common sheath;
c) a longitudinal support mounted in the housing having a generally planar member which runs along the length of the housing away from the end face in which the entry port is located, the generally planar member dividing the interior space of the housing longitudinally into an anterior section and a posterior section;
d) a fibre routing system mounted on the longitudinal support in the anterior section for routing an optical fibre, which has been separated out from a hybrid cable received in the entry port, to one of a plurality of fibre termination components in the anterior section;
e) an opening in the longitudinal support permitting a powered conductor to pass from the anterior section to the posterior section; and
f) a plurality of mounting points provided on the posterior side of the generally planar member for securely receiving a plurality of electrical components to be powered by the powered conductor.

The cuboid housing is internally divided into two volumes by the generally planar member of the longitudinal support on which the remaining components are mounted. The division of the internal space into an anterior section where the fibre routing takes place and a posterior section which contain powered electrical components, provides for an efficient and modular configuration. The structure allows for efficient manufacturing and reduced costs, with the longitudinal support providing a tower or spine onto which the other fibre and power components can be mounted, the entirety being contained in a cuboid housing.

Preferably, said mounting points include a first DIN rail mount and a second DIN rail mount, the first and second DIN rail mounts being adapted to engage with complementary formations on electrical components which may be secured to the rail mounts.

Preferably, the first rail mount comprises a rail member which is disposed parallel to the generally planar member, and the second rail mount comprises a rail member which is disposed perpendicular to and extending from the generally planar member.

Preferably, the fibre routing system is a fibre routing system according to any of the earlier statements of invention for such a fibre routing system.

Preferably, the enclosure further comprises a divider plate as defined in any of the earlier statements of invention relating to such a divider plate.

Preferably the housing further comprises an exit port for admitting the same or a different hybrid power and fibre cable.

Preferably, the enclosure further comprises a communications module, powered by the powered conductor, which receives signals indicative of the state of one or more components within the enclosure, and which communicates via a wireless network with an external device or system.

Such a communications module permits the device to have a powered, always-on network connection with external systems, for monitoring the state of components within the housing and without requiring periodic replacement of batteries or a separate power supply network connection as with conventional fibre network enclosures.

### BRIEF DESCRIPTION OF THE DRAWINGS

The present invention will now be described, by way of example only, with reference to the accompanying drawings, in which:
Figs. 1-54 relate to a first embodiment and Figs. 55-106 relate to a second embodiment:
Figs. 1-7 show a fibre enclosure Dome Base, in in a modular system in accordance with an embodiment of the invention.
Figs. 8-11 show a Fibre Adaptor Plate (FAP), in the modular system, in accordance with the first embodiment.
Figs. 12-14 show the Fibre Entrance System (FES) Block in the modular system, in accordance with the first embodiment.
Figs. 15-20 shows a schematic diagram of the Fibre Routing (FR) Block in the modular system, in accordance with the first embodiment.
Figs. 21-23 show the Fibre Holding Splice Tray modular system, in accordance with the first embodiment.
Figs. 24 and 25 show the Planar Waveguide Splitter Holding Tray (PLC- Tray) in the modular system, in accordance with the first embodiment
Figs. 26-28 show the Splitter Holding Tray Lid (PLC-Lid) in the modular system, in accordance with the first embodiment.
Figs. 29 and 30 show the Locking Peg (LP) in the modular system, in accordance with the first embodiment.
Figs. 31-35 show the IOT Dome Cover in the modular system, in accordance with the first embodiment.
Figs. 37-40 show the toggle hatch clamp system in the modular system, in accordance with the first embodiment.
Figs. 41-54 show successive stages in the assembly of a complete device according to the first embodiment;
Figs. 55-57 show a fibre enclosure Dome Base, in in a modular system in accordance with a second embodiment.
Figs. 58-62 show a Fibre Optic Hybrid Storage Tower (HST) in the modular system, accordance with the second embodiment;
Figs. 63-64 show the Hybrid Storage Tower with optical and electrical components mounted in place;
Fig. 65 show the IOT Storage Box Lid (IOT-Lid) in the modular system, in accordance with the second embodiment;
Figs. 66-69 show a Fibre Adaptor Plate (FAP), in the modular system, accordance with the second embodiment;
Figs. 70-72 show the Fibre Entrance System (FES) Block in the modular system, in accordance with the second embodiment;
Figs. 73-78 show the Fibre Routing (FR) Block in the modular system, in accordance with the second embodiment;
Figs. 79-81 show the Fibre Holding Splice Tray modular system (FST), in accordance with the second embodiment;
Figs. 82-83 show the Planar Waveguide Splitter Holding Tray (PLC- Tray) in the modular system, in accordance with the second embodiment;
Figs. 84-86 show the Splitter Holding Tray Lid (PLC-Lid) in the modular system, in accordance with the second embodiment;
Figs. 87-88 show the Locking Peg (LP) in the modular system, in accordance with the second embodiment;
Figs. 89-91 show the Dome Cover in the modular system, in accordance with the second embodiment;
Figs. 92-95 show the toggle hatch clamp system in the modular system, in accordance with the second embodiment; and
Figs. 96-106 show successive stages in the assembly of a complete device according to the second embodiment;

### DETAILED DESCRIPTION OF PREFERRED EMBODIMENTS

### First Embodiment

### DOME BASE

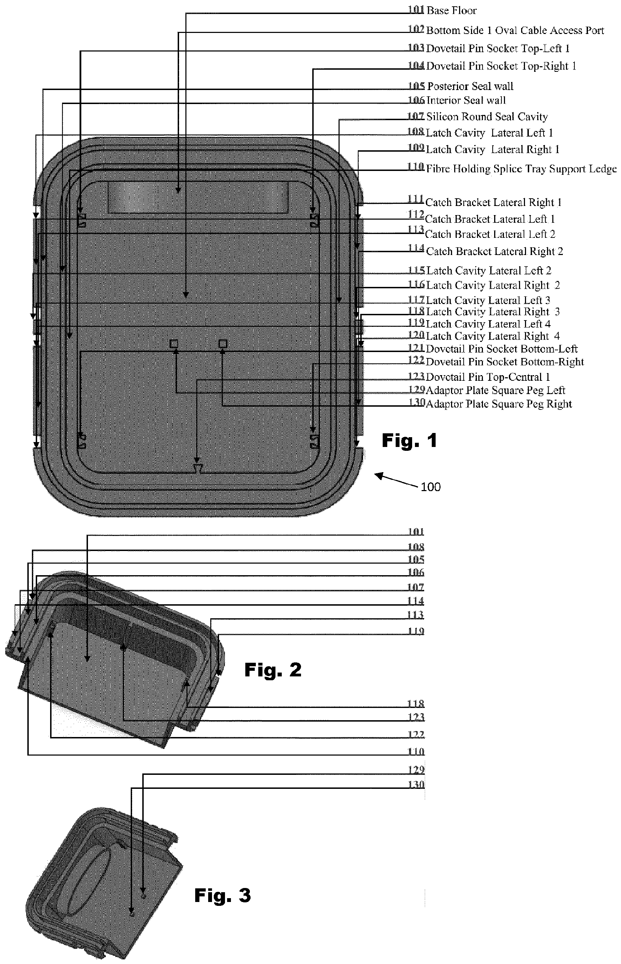

Referring collectively to Figs. 1-7 a Fibre Dome Base, in accordance with an embodiment of the invention, is generally described with reference to numeral 100. The dome base encompasses holding area on the operatively anterior of the embodiment, and a fixation and storage system on the operatively posterior end of the fibre dome base.

The dome base 100 contains a Dome Base Floor 101 and bottom side 1 oval cable access port 102.

The dome base 100 further contains a dovetail pin socket top-left 103 and a dovetail pin socket top right 104, the dovetail joints 103 and 104 described in this embodiment is directly attached to the Dome Base Floor 100 and are horizontal aligned with each other.

The dome base 100 further contains a posterior seal wall 105 with a vertical parallel alignment to the interior seal wall 106 which establishes the arrangement for the silicon seal cavity 107.

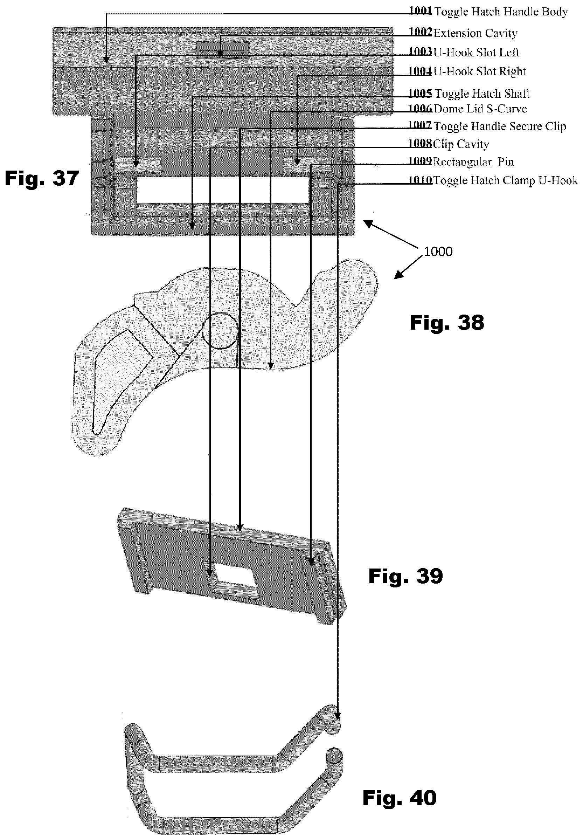

At 108 the dome base 100 contains latch cavity lateral left (1) and latch cavity lateral left (2) 115 encompassing catch bracket lateral left (2) 112 for engagement with Toggle Hatch Clamp System (THC) in Figs. 37-40.

The dome base 100 further contains at 109 the latch cavity lateral right (1) and latch cavity lateral right (2) 116 encompassing catch bracket lateral right (111) for engagement with Toggle Hatch Clamp System (THC) in Figs. 37-40.

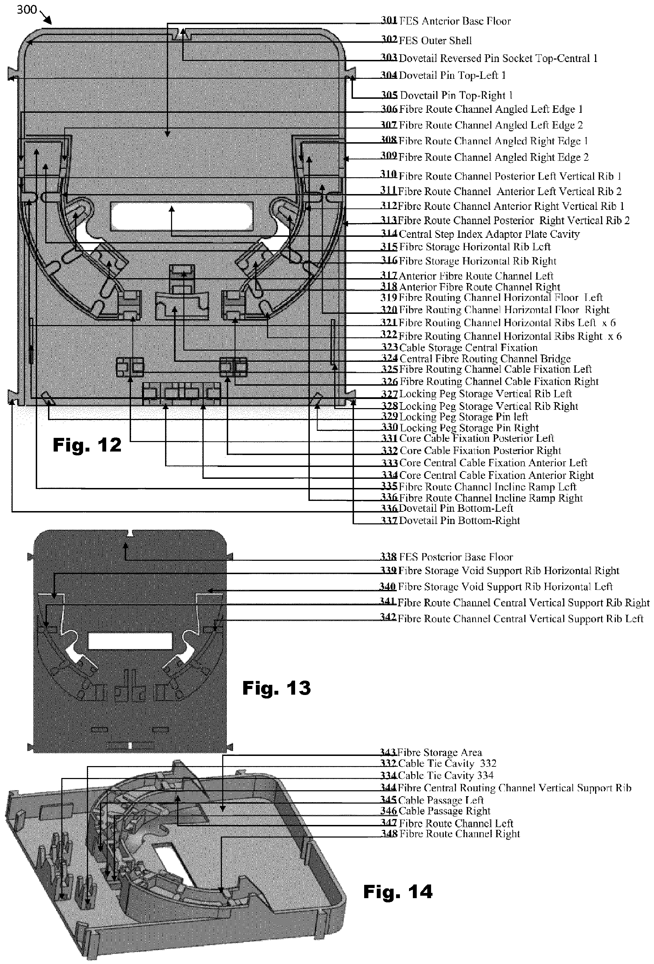

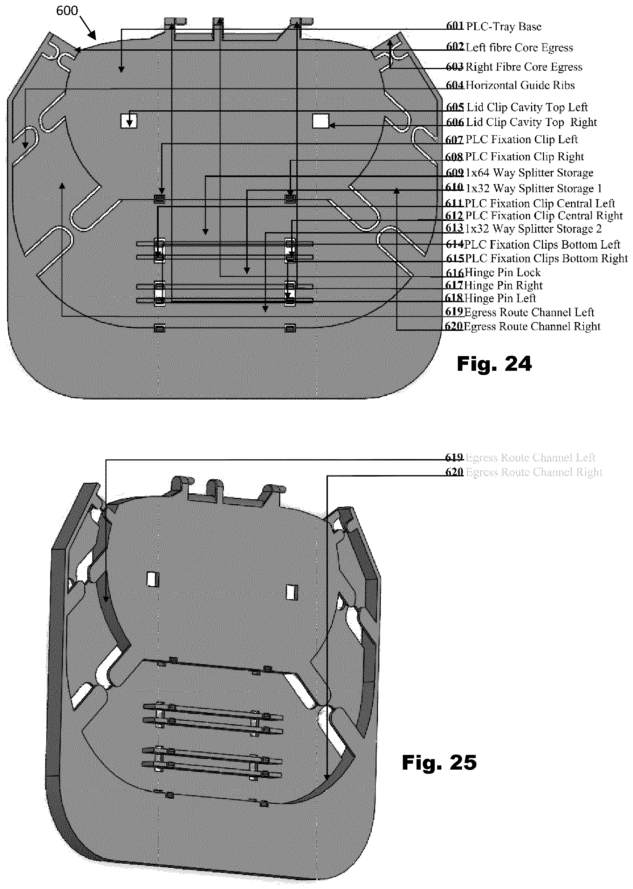

At 110 the dome base 100 contains a fibre holding splice tray support ledge and establishes a new arrangement for Fibre Holding Splice Tray (s) (FST) described in Figs. 24 and 25 to be elevated from the Dome Base floor 101 when in rest and establishes and arrangement for the Fibre Entry System Block (FES Block) described in Figs. 12-14.

At 117 the dome base 100 contains latch cavity lateral left (3) and latch cavity lateral left (4) 119 encompassing catch bracket lateral left (2) 113 for engagement with Toggle Hatch Clamp System (THC) in Figs. 37-40.

The dome base 100 further contains at 118 the latch cavity lateral right (3) and latch cavity lateral right (4) 120 encompassing catch bracket lateral right (2) 114 for engagement with Toggle Hatch Clamp System (THC) in Figs. 37-40.

The dome base 100 further contains a dovetail pin socket bottom-left 121 and a dovetail pin socket bottom-right 122, the dovetail joints 121 and 122 are directly attached to the Dome Base Floor 100 and are horizontal aligned with each other.

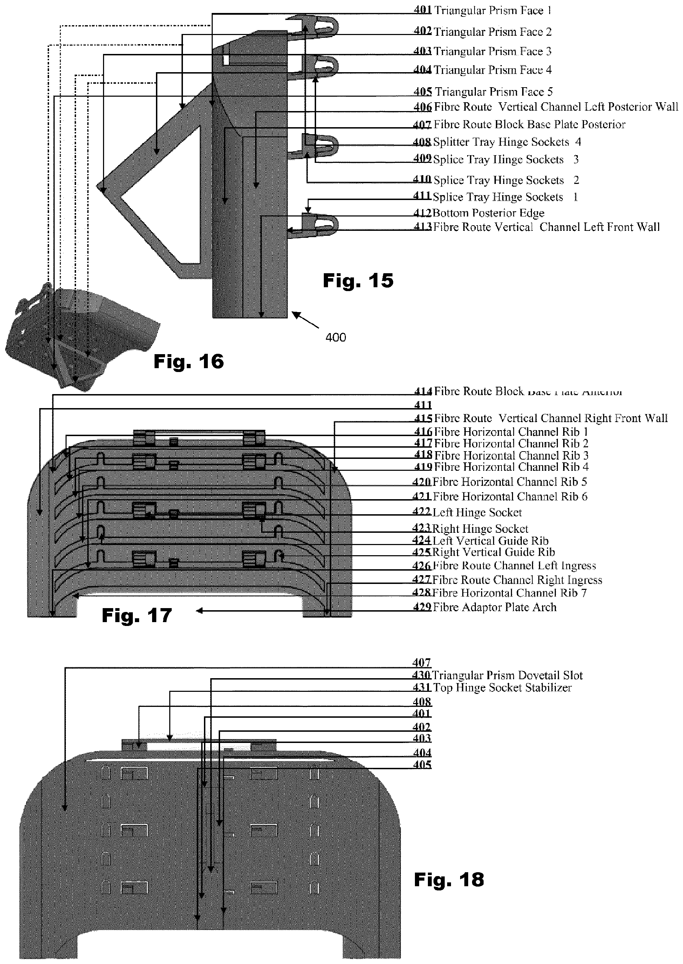

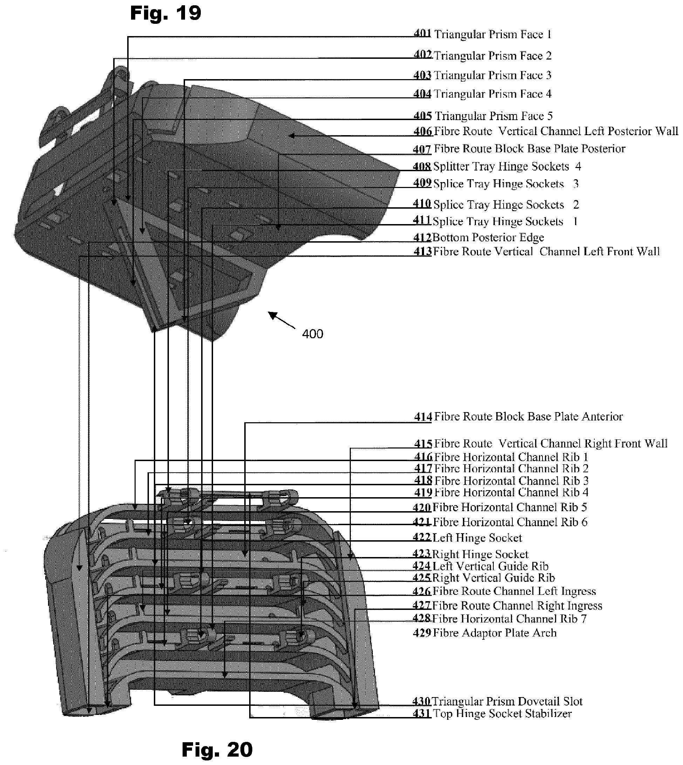

At 123 the dome base 100 contains a dovetail pin top-right central, directly attached to the dome base floor 100 and the operatively anterior of the embodiment. In this embodiment of the invention the relative location of the dovetail pin top-right central 123 establishes the structural integrity with an exclusive central affixation between the Fibre Entry System Block FES Block) described in Figs. 12-14 with a vertically alignment to the Fibre Routing Block (FR Block) described in Figs. 15-20.

The dome base 100 contains within the said embodiment to the operatively posterior a mounting bracket top right 124 and mounting bracket top left 125, directly to the lateral opposite of the mounting bracket bottom right 126 and mounting bracket bottom left 127.

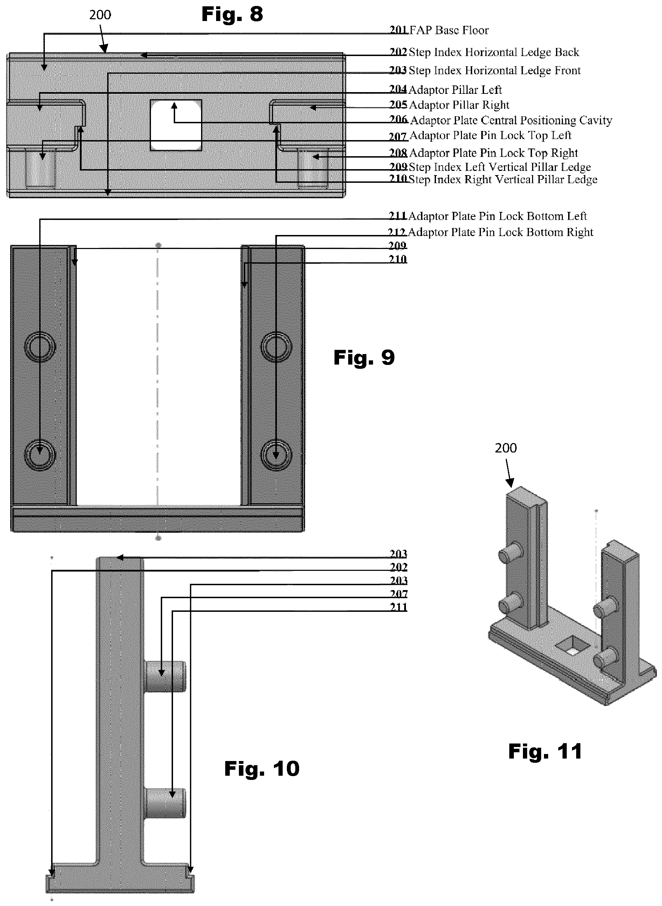

At 129 the dome base 100 contains an adaptor plate square peg left and symmetrical to horizontal right adaptor plate square peg right 130, which establishes the arrangements for the Fibre Adaptor Plate (FAP) described in Figs. 8-11 to be positioned precisely.

### FIBRE ADAPTOR PLATE

In Figs. 8-11 a Fibre Adaptor Plate is generally described with reference to numeral 200. The fibre adaptor plate encompasses four adaptor pins located on the vertical left pillar and the vertical right pillar. The said embodiment encompasses an adaptor plate central positioning cavity.

The fibre adaptor plate 200 contains a Fibre Adaptor Plate Floor 201 and a lateral back step index horizontal ledge 202 with a lateral front step index horizontal ledge 203. In this embodiment of the invention the step index ledge establishes a secure lock for the upper next component the Fibre Entry System Block FES Block) described in Figs. 12-14.

Furthermore, the fibre adaptor plate 200 contains an adaptor plate pillar left 204 located at the posterior most left edge of the said embodiment with a symmetrical adaptor plate pillar right 205 located at the posterior most right edge of the embodiment with the pillars in symmetrical vertical establishment it arranges for the fibre optic adaptor couplers to be positioned coincidently and centrally between the pillars.

The fibre adaptor plate 200 contains an adaptor plate central positioning cavity 206 to be coincidently individually coupled at 129 and 130 of dome base 100, with this coupling the Fibre adaptor plate 200 is precisely positioned to be coupled into the upper next component the Fibre Entry System Block FES Block) described in Figs. 12-14.

At 207 the fibre adaptor plate 200 contains an adaptor plate pin lock top left and symmetrical horizontally an adaptor plate pin lock top right 208, which secures the fibre coupler into a top central position.

The fibre adaptor plate 200 contains at 209 a step index left vertical pillar ledge and at 210 a step index right vertical pillar ledge, the two ledges parallel with each other establishes the arrangements for the fibre couplers to be inter-locked to the said embodiment.

At 211 the fibre adaptor plate 200 contains an adaptor plate pin lock bottom left and symmetrical horizontally an adaptor plate pin lock bottom right 212, which secures the fibre coupler into a bottom central position.

### FIBRE ENTRY SYSTEM (FES) BLOCK

In Figs. 12-14 a Fibre Entry System (FES) block is generally described with reference to numeral 300. The FES block contains a fibre storage area at the operatively anterior front of the embodiment. The fibre storage area establishes the original pathway for the fibre routing channels at the operative anterior middle of the said embodiment encompass a fibre fixation system to the fibre routing channel. A fibre entrance and fixation at the operatively anterior bottom of the said embodiment.

The FES block 300 encompass FES anterior base floor at 301, and a FES block FES outer shell at 302.

At 303 of the FES block 300 is a dovetail reverse pin socket top-central, the dovetail pin reverse socket is a central colocation with the Fibre Routing (FR) Block described in Figs. 15-20. The dovetail pin reverse socket couples with 123 dovetail pin top-central of Fig. 1.

The FES block 300 contains a dovetail pin top left 304 and a dovetail pin top right 305, the dovetail pin top left 304 will couple with dovetail pin socket bottom right 122 of Fig. 1 and dovetail pin top-right dovetail 305 coupled with dovetail pin socket top left (121) of Fig.1.

Furthermore, the FES block 300 contains a fibre route channel angled left edge (1) 306 and fibre route channel angled left edge (2) 307 to establish the arrangement of the coupling for the bottom operative posterior angled left edge of the Fibre Route (FR) block described in Figs. 15-20 of the invention, the coupling of the Fig. 12 and Fig. 15 components will form a secure left-side pathway for fibre cores to be routed to their respective splice and termination position.

The FES block 300 contains a fibre route channel angled right edge (1) 308 and fibre route channel angled right edge (2) 309 to establish the arrangement of the coupling for the bottom operative *posterior angled right edge* of the Fibre Route (FR) block described in Figs. 15-20 of the invention, the coupling of the Fig. 12 and Fig. 15 components will form a secure right-side pathway for fibre cores to be routed to their respective splice and termination position.

At 310 of the FES block 300 is a fibre route channel posterior left vertical rib (1) and a fibre route channel anterior left vertical rib (2) 311 to create a channel to the left vertical off-center of the embodiment furthermore at 312 of the FES block 300 is a fibre route channel anterior right vertical rib (1) and a fibre route channel posterior right vertical rib (2) 313 to create a channel to the right vertical off-center of the embodiment.

The FES block 300 contains a central step index adaptor plate cavity at 314, the step index ledge will couple with the step index horizontal ledge back (202) of the FAP and the step index horizontal ledge front (203) of the FAP to secure the FAP into a permanent position locking the FAP between the Fig. 1 and Fig. 12 components without the assistance of an of any mechanical screws.

A fibre storage horizontal rib left 315 and fibre storage horizontal rib right (316) with a primary function to extend the fibre storage void established at the bottom posterior of the left fibre route-channel and the bottom posterior right of the fibre route-channel and contain the fibre cable into the fibre storage area , with a secondary function in the separation between the fibre storage area and the pathway to the upper anterior fibre route-channel left 317 and the upper anterior route channel right

At 317 of the FES block 300 is an anterior fibre route channel left and at 318 a anterior fibre route channel right with a very specific angle an position with alignment to the central fibre routing channel, this second division between fibre storage area and the fibre route channels secures the fibre buffer tubes to be routed to the central core cable fixation.

Furthermore FES block 300 contains a fibre routing channel horizontal floor left 319 and fibre routing channel horizontal floor right 320 with an operative posterior bottom that establishes the arrangement for a storage void horizontal containment with the FES anterior base floor and an operative anterior the establishes the arrangement of a base floor for the fibre route-channels at 321 the fibre routing horizontal ribs left and the fibre routing channel horizontal ribs right 322 creates containment for the fibre buffer tubes at the operative anterior of the fibre routing-channels

The FES block 300 contains cable storage central fixation 323 encompassing a cavity void that establishes the arrangement for a zip-tie to be wrapped around the buffer tubes to be fixated, the V-groove accommodates different size tubes in one position. With the cable storage central fixation, throughput fibre buffer tubes will be contained to the said enclosure.

The FES block 300 contains a central fibre routing channel bridge 324 which arranges fibre buffer tubes to break-out and channeled in alignment with the Fibre route channel left and right. The primary function is to ensure buffer tubes are secured and bridged over lower lateral ingress cables.

Furthermore, the FES block 300 contains at 325 fibre routing channel fixation left and at 326 fire routing channel fixations right, the V-groove accommodates different size tubes in one position, this is the central fixation for fibre buffer tubes to be routed into their respective splice position.

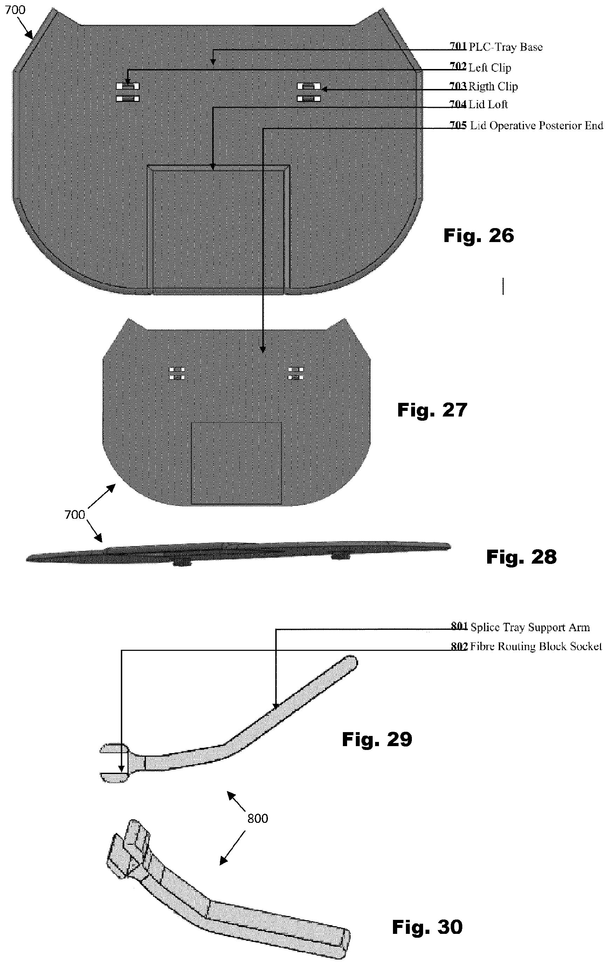

The FES block 300 contains a locking peg storage vertical rib left 327 and locking peg storage vertical rib right 328 which create a secure cavity with the FES outer shell 302 for storing a Locking Peg (LP) described in Figs. 29 and 30. Furthermore, the FES block 300 contains a locking peg storage pin left 329 and a locking peg storage pin right 330 to be coupled with the locking peg socket for secure fixation.

At 331 of the FES block 300 is a core cable fixation posterior left encompassing a cavity void that establishes the arrangement for a zip-tie to be wrapped around the ingress cable for fixation, and latterly horizontal to 331 a core cable fixation posterior right 332 encompassing a cavity void that establishes the arrangement for a zip-tie to be wrapped around the buffer tubes to be fixated, the said V-groove accommodates different size tubes in one position.

At 333 of the FES block 300 is a core central cable fixation anterior left encompassing a cavity void that establishes the arrangement for a zip-tie to be wrapped around the ingress cable for fixation, and directly attached to 333 a core central cable fixation anterior right 334 encompassing a cavity void that establishes the arrangement for a zip-tie to be wrapped around the buffer tubes to be fixated, the said V-groove accommodates different size tubes in one position.

The FES block 300 contains a fibre route channel incline ramp left 335 and fibre route channel incline ramp right 336 attached directly to the FR block described in Figs. 15-20 and establishes a arrangement for smooth transition for the fibre cores final routing and termination location.

The FES block 300 contains a dovetail pin bottom left 336 and a dovetail pin bottom right 337, the dovetail pin bottom left 336 will couple with dovetail pin socket top right 104 of Fig. 1 and dovetail pin bottom right 337 coupled with dovetail pin socket top left (103) of Fig. 1. The precise alignment ensures the embodiment has no requirement for any mechanical screws.

At 338 of the FES block 300 is the FES posterior base floor

At of the FES block 300 is a fibre storage void horizontal rib right 339 and fibre storage void rib horizontal left 340 with the said embedment it has an operational posterior function as the containment truss for the storage void

The FES block 300 contains a fibre route channel central vertical support rib right 341 and fibre route channel central vertical support rib left 342 which establishes the foundational structure for the fibre route channel 347 and 348 it further establishes the arrangement in the from of a minimum bend-radius guide support for the fibre buffer tubes storage area.

The FES block 300 contains a fibre storage area 343 defined by 302,339,340,341 and 342 furthermore the support from the Fibre Routing (FR) Block in Figs. 15-20 will create a total spring coil compressor for the natural spring in fibre buffer tubes to be stored.

The FES block 300 contains a fibre central channel vertical support rib 344 will encompass 324, which is a central Division for cable passage left 345 and cable passage right 346. The cable passage will arrange for ingress cable to be routed safely to their respective termination and storage location.

The FES block 300 contains a fibre route channel left 347 and a fibre route channel right 348 that will couple with the Fibre Routing (FR) Block described in Figs. 15-20 to arrange for a singular routing system combined for fibre cores to their final termination position.

### FIBRE ROUTING (FR) BLOCK

In Figs. 15-20 a Fibre Routing Block 400 contains a triangular prism face (1) 401, Directly attached to the operative posterior of the FR base plate.

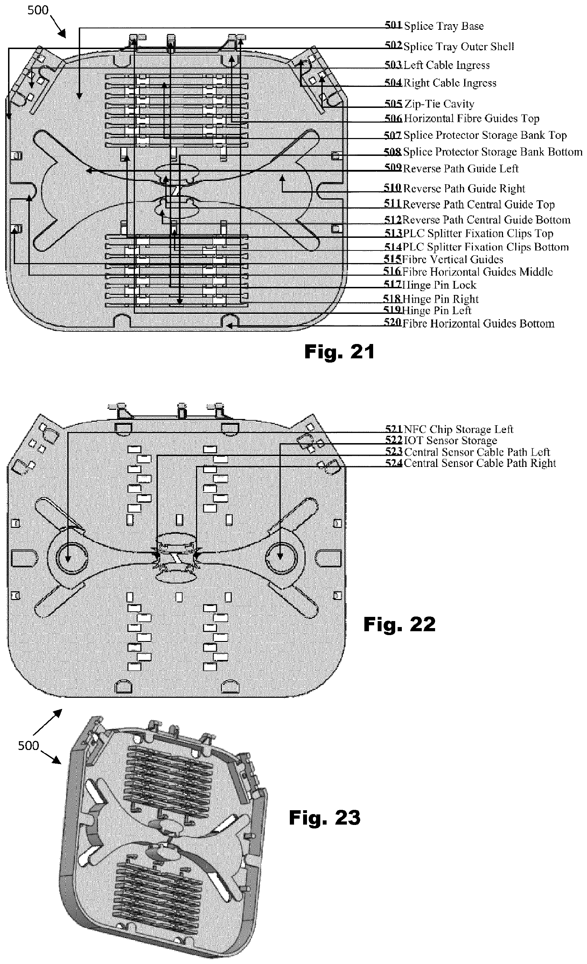

At 402 of the fibre routing block 400 is triangular prism face (2) this face of the triangular prism is at a 48-degree angle offset to triangular prism face (1) 401, this precise angle establishes the arrangements for the Fibre Holding Splice Tray (s) (FST) described in Figs. 21-23, to be staggered in a step indexed compact manner on top of each other to create a higher density fibre cable application for the invention.

Furthermore, comprising of a dovetail slot (431) to directly couple with the Fig. 1 dovetail pin top-central (123) above the FES block described in Figs. 12-14.

The fibre routing block 400 contains a triangular prism face (3) this face of the prism establish a truss at the top end of the FES block it completes the fibre storage area in the FES block (Comprising the route channel Left & right, the Outer shell and triangular prims face 3, fibre buffer tubes will be pushed in under face 3 which will contain the natural spring resistance of fibre buffer tubes into the fibre storage area without any means of mechanical fixation like a zip tie.

At 404 of the fibre routing block 400 is a triangular prism face (4) and a triangular prism face (5) 404

The fibre routing block 400 contains a fibre route block outer shell (406) this shell is the operative posterior vertical wall for the fibre route channel on the left and right side of the FR block. Furthermore at 407 is the fibre route block outer shell operative posterior attached to this is the triangular prism face 1.

The fibre routing block 400 contains splitter tray hinge socket (4) 408 located at the top of the FR block also at 409 splice tray hinge socket (3), 410 splice tray hinge socket (2) and 411 splice tray hinge socket (1) which establish the arrangements for the direct coupling to the Fibre Holding Splice Tray (s) (FST) described in Figs. 21-23.

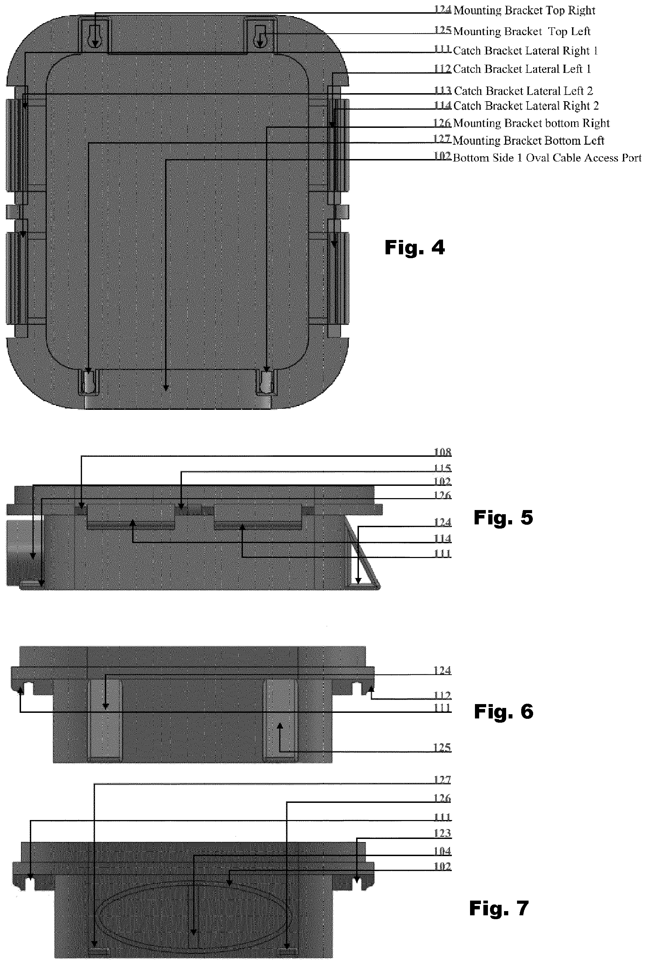

At 412 of the fibre routing block 400 is the bottom posterior edge of the FR block routing channels, which will have a direct coupling with the FES block fibre route channel angled edge 306,307,308 and 309. The coupling will offer structural support to the FR block taking strain away from the central dovetail joint between Fig. 1 and 4 components and extend the fibre route channel from the FES block into the FR block to create one fibre routing system for fibres to be routed to and from any splice position.

The fibre routing block 400 contains a fibre vertical channel left front wall 413 and a fibre route channel vertical right 415 front encompassing the outer shell to form a vertical fibre route channel.

At 414 of the fibre routing block 400 is the FR block outer shell operative anterior the outer shell which establishes the arrangement for the Fibre horizontal channel ribs 416,417,418,419,420 and 421 which are horizontally aligned with the Fibre Holding Splice Tray (s) (FST) described in Figs. 21-23 for fibre cores to be routed to their respective termination position and also creates a transient free path for fibres to be transported to any other termination position with out the need for any transportation tubing.

The fibre routing block 400 contains a left vertical guide rib 425 and a right vertical guide rib which will retrain core fibres to their respective channel.

At 426 of the fibre routing block 400 is the fibre route channel left ingress point and at 427 is the fibre rout channel right ingress point.

The fibre routing block 400 contains a fibre horizontal channel rib (7) 428 and a fibre adaptor plate arch 429 which establishes the arrangement for the internal connected fibres to adhere with minimum bend radius rules.

At 430 of Fibre routing block 400 is a dovetail slot joint with the dovetail slot set a specific depth for the most bottom Fibre Holding Splice Tray (s) (FST) described in Figs. 21-23 to be parallel and coincident with the fibre holding splice tray support ledge 110 of Fig. 1.

The fibre routing block 400 contains a top hinge socket stabilizer that horizontally attaches the top hinges together and secures stability of the Planar Waveguide Splitter Holding Tray (PLC-Tray) described in Figs. 24 and 25.

### FIBRE HOLDING SPLICE TRAY (FST)

In Figs. 21-23 a Fiber Holding Splice Tray 500 contains a splice tray base 501 and a splice tray outer shell 502 this establishes the foundation for splicing elements.

At 503 of the fibre holding splice tray 500 is a left cable ingress comprising of horizontal cable guides and zip-tie cavities which establishes the arrangement for transient free fibre routing as a primary function but also the fixation of buffer tubes during midspan cable access.

At 504 of the fibre holding splice tray 500 is a right cable ingress comprising of horizontal cable guides and zip-tie cavities 505 which establishes the arrangement for transient free fibre routing as a primary function but also the fixation of buffer tubes during midspan cable access.

The fibre holding splice tray 500 contains horizontal fibre guides top 506 with the primary function to contain fibre cores within the boundary of the splice tray outer shell and the splice protector storage bank top.

The fibre holding splice tray 500 contains a splice protector storage bank top 507 and at 508 a splice protector bank bottom which establishes the arrangement for fibre splice protectors to be stored.

At 509 of the fibre holding splice tray 500 is a revers path guide left and at 510 reverse path guide which is centrally located to the splice tray to allow fibres to be routed in a reversed direction furthermore the fibre holding splice tray 500 contains a revers path central guide top 511 and a reverse path central guide bottom.

At 513 of Fibre holding splice tray 500 is a PLC (Planar Waveguide Circuit) splitter fixation clips top comprising of three clips parallel and horizontally to the splice bank top 507 using the splice bank lower vertical rib as a support back wall to house a 4x4x40 mm splitter.

The fibre holding splice tray 500 contains a PLC (Planar Waveguide Circuit) splitter fixation clips bottom 514 comprising of three clips parallel and horizontally to the splice bank bottom 508 using the splice bank upper vertical rib as a support back wall to house in a 4x4x40 mm splitter.

At 515 of the fibre holding splice tray 500 is the fibre vertical guides located at the operative anterior of the outer shell on the right and left side of the fibre splice tray, which establish the arrangements for fibre ingress or egress cores to be transported on the outer edge of the splice tray as to distinguish between PLC circuits and distribution cable circuits.

The fibre holding splice tray 500 contains at 516 Fibre horizontal guides middle with the primary function of containing fibres cores managed within the splice tray.

At 517 of the fibre holding splice tray 500 is a hinge pin lock and a hinge pin right 518 with a hinge pin left 519 directly attached to the operative posterior top of the outer shell which establish the arrangement to couple the splice tray to the Fig. 15 splice tray hinge sockets.

The fibre holding splice tray 500 contains horizontal fibre guides bottom 520 with the primary function to contain fibre cores within the boundary of the splice tray outer shell and the splice protector storage bank bottom end.

At 521 of the fibre holding splice tray 500 is an NFC (near field communication) chip storage location left which is directly attached at the operative posterior end of the revers path guide right 510.

At 522 of the fibre holding splice tray 500 is a IOT sensor storage location, which is directly attached at the operative posterior end of the reverse path guide left 509. Furthermore, the fibre holding splice tray 500 contains at 523 a central sensor cable path left and at 24 a central cable path right for the transportation of sensor cables between the IOT sensor storage and the NFC chip storage left.

### PLANAR WAVEGUIDE SPLITTER HOLDING TRAY (PLC-TRAY)

Figs. 24 and 25 show a Planar Waveguide Splitter Holding Tray 600 which contains PPLC tray base 601 comprising a left fibre core egress 602 and a right fibre core egress 603 the egress path will transport fibres through the Fiber Routing Block to its designated splice tray described in Figs. 21-23 for final splicing and storage.

At 604 of PLC tray 600 is horizontal guide ribs 604 the horizontal guide ribs contains the PLC fibre cores into the route channel. Furthermore, the PLC tray 600 contains lid clip cavity left 605 and a clip cavity right 606 for the Splitter Holding Tray Lid (PLC-Lid) described in Figs. 26-28 to be clipped into the cavity this will close of the PLC-tray and protect the passive components from any external forces damaging the fibre cores.

The PLC tray contains PLC fixation clip top left 607 and its symmetrical opposite along with PLC central fixation clip top right 608 with its with its symmetrical opposite this establishes the arrangements for the 1x 64-way plc splitter to be secured into the 1x 64-way splitter storage 609 of the PLC-Tray.

At 610 of the PLC tray 600 is a 1x32 way splitter storage 1 encompassing PLC fixation clip central left 611 and its symmetrical opposite along with PLC central fixation clip central right 612 with its with its symmetrical opposite this establishes the arrangements for the 1 x 32-way plc splitter to be secured into the 1x 32-way splitter storage 610 of the PLC-Tray.

At 613 of the PLC tray 600 is a 1x32 way splitter storage 2 encompassing PLC fixation clip bottom left 614 and its symmetrical opposite along with PLC central fixation clip bottom right 615 with its with its symmetrical opposite this establishes the arrangements for the 1 x 32-way plc splitter to be secured into the 1x 32-way splitter storage 613 of the PLC-Tray.

At 616 of the PLC tray 600 is a hinge pin lock and a hinge pin right 617 with a hinge pin left 618 directly attached to the operative posterior top of the PLC-Tray, which establish the arrangement to couple the splice tray to the Fiber Routing Block splice tray hinge sockets.

The PLC tray 600 contains an egress route channel left at 619 and an egress route channel right 620 which provides a direct transport path for fibre cores to be routed to their final termination position.

### SPLITTER HOLDING TRAY LID (PLC-LID)

As seen in Figs. 26-28, the Splitter Holding Tray Lid or PLC-lid 700 contains a PLC-Tray base 701 comprised with a left clip 702 and a right clip 703 which will couple directly with the PLC-Tray 605 and 605. Furthermore, the PLC-lid 700 contains a lid loft 704 which create space for the PLC-Splitter clips as for the lid operative posterior end 705 to attached coincidently to the PLC-Tray.

### LOCKING PEG (LP)

As seen in Figs. 29-30, the Locking Peg 800 contains a splice tray support arm 801 at an angle the support arm locks the splice tray in an upright position providing that fibre management is made possible in lower splice tray and the fibre entrance system. Furthermore, the Locking peg contains a fibre routing block socket 802 that directly couple with the fibre horizontal channel ribs in Figs. 15-20. In this way the support arm can be coupled with an underlying tray and used to prop up a higher splice tray to allow access to the underlying tray.

### IOT DOME COVER

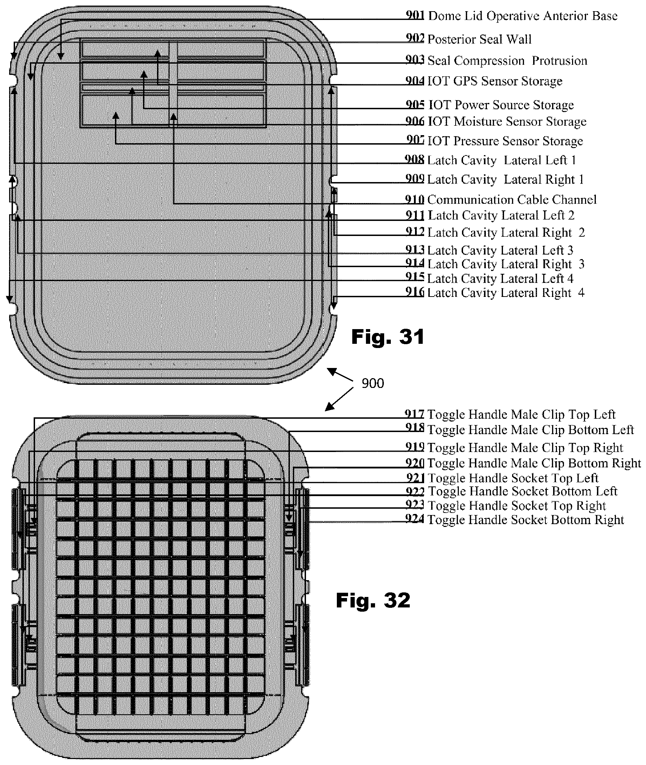

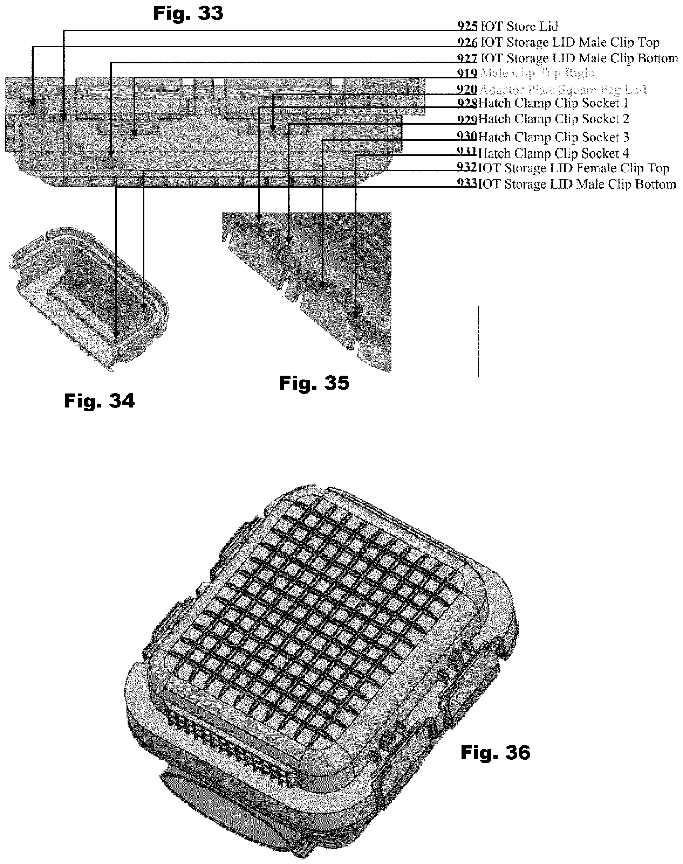

As seen in Figs. 31-35 an IOT Dome Cover 900 contains a dome lid operative anterior base comprising a posterior seal wall 902 and seal compression protrusion 903 which establishes the arrangement to enclose the complete system forming a tight IP68 seal preventing any external forces from entreating the enclosure, the seal compression protrusion will slot in between 105 and 106 of Fig. 1 together with a Toggle Hatch Clamp System (THC) described in Figs. 37-40 compress round silicone O-ring seal to ensure its seals to IP68 standards. Fig. 36 shows the lid when in place on the base and prior to fitting of the clamps.

The IOT dome cover 900 contains a IOT GPS sensor storage at 904, IOT power storage at 905, IOT moisture sensor storage at 906 and IOT pressure sensor storage at 907, which are specifically arranged in a stepped index manner to mirror the step index formation established by the splice trays and PLC tray. This step index is closed off with IOT storage lid in its final closed position the IOT storage box will have a secondary function as to secure the components of Figs. 21 and 24 into a stalemate position which will ensure fibre cores stored within the device will be stable when the fibre enclosures are moved around.

Furthermore, the IOT dome cover 900 Contains at 908 latch cavity lateral left (1) and latch cavity lateral left (2) 911 encompassing toggle handle socket top left 921 for engagement with Toggle Hatch Clamp System (THC) of Figs. 37-40.

The IOT dome cover 900 Contains at 910 a communications cable channel which the interconnecting of sensor cables are made possible.

Furthermore, the IOT dome cover 900 Contains at 909 latch cavity lateral right (1) and latch cavity lateral Right (2) 912 encompassing toggle handle socket top left 923 for engagement with Toggle Hatch Clamp System (THC) of Figs. 37-40.

The IOT dome cover 900 contains at 913 latch cavity lateral left (3) and latch cavity lateral left (4) 915 encompassing toggle handle socket top left 922 for engagement with Toggle Hatch Clamp System (THC) of Figs. 37-40.

The IOT dome cover 900 contains at 914 latch cavity lateral right (3) and latch cavity lateral right (4) 916 encompassing toggle handle socket top left 924 for engagement with Toggle Hatch Clamp System (THC) of Figs. 37-40.

At 917 of the IOT dome cover 900 is a toggle handle male clip top left, bottom left 918, top right 919 and bottom right 920. These features establish the arrangement for the toggle handle secure clip describe in the Toggle Hatch Clamp System (THC) of Figs. 37-40 to catch the toggle handle in a final permanent position within the toggle handle socket cavity (921,922,923,924) whilst also permitting free movement.

The IOT dome cover 900 contains a hatch clamp clip socket 1 928, socket (2) 929, socket (3) 930, socket (4) 931. This will couple with the toggle handle secure clip ensuring alignments and gauging the depth of the setting allowing enough space for free movement of the toggle handle. Furthermore, the IOT dome cover 900 contains a IOT storage lid 925 comprising a IOT lid male clip top and its symmetrical opposite with a IOT storage lid male clip bottom and its symmetrical opposite t closes off by coupling with the IOT storage box female clip top 932 and bottom 933 ensuring components will be confined into the respective cavity and will prevent damage fibre during move of the fibre enclosure in any direction.

### TOGGLE HATCH CLAMP (THC) SYSTEM

As seen in Figs. 37-40 a Toggle Hatch Clamp System 1000 contains a toggle hatch handle body comprising of an extension cavity 1002, u-hook slot left 1003, u-hook lot right 1004, toggle hatch shaft and a dome lid s-curve which establishes the arrangements for the toggle hatch clamp u-hook to be coupled together and placed in the toggle handle sockets (921-924) to be securely clipped into permanent position by the toggle handle secure clip. This will for the Toggle Hatch Clamp System.

### ASSEMBLY OF THE DEVICE

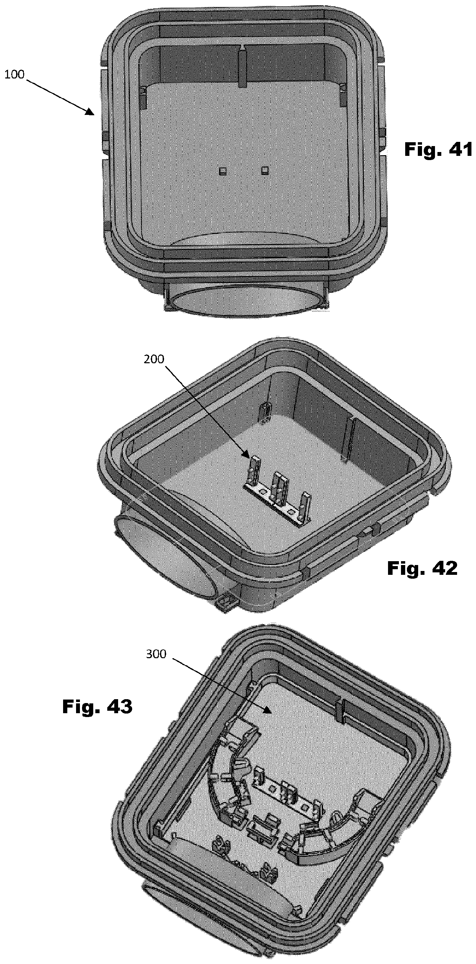

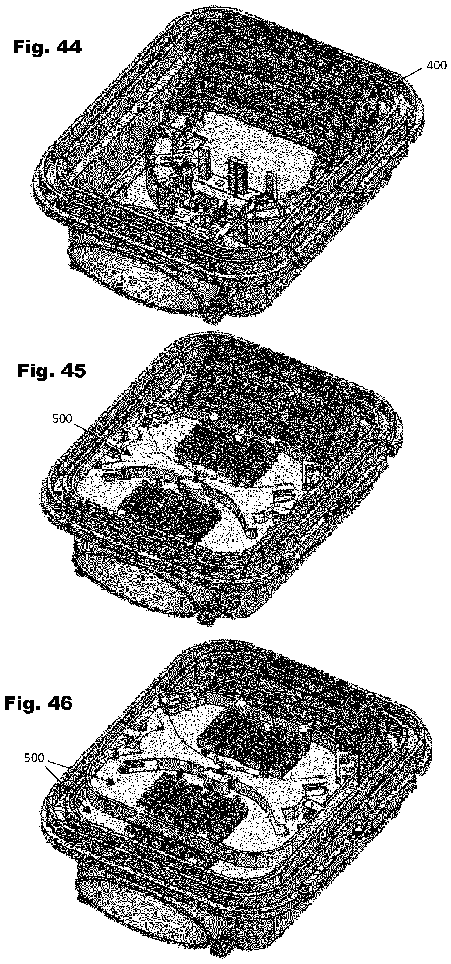

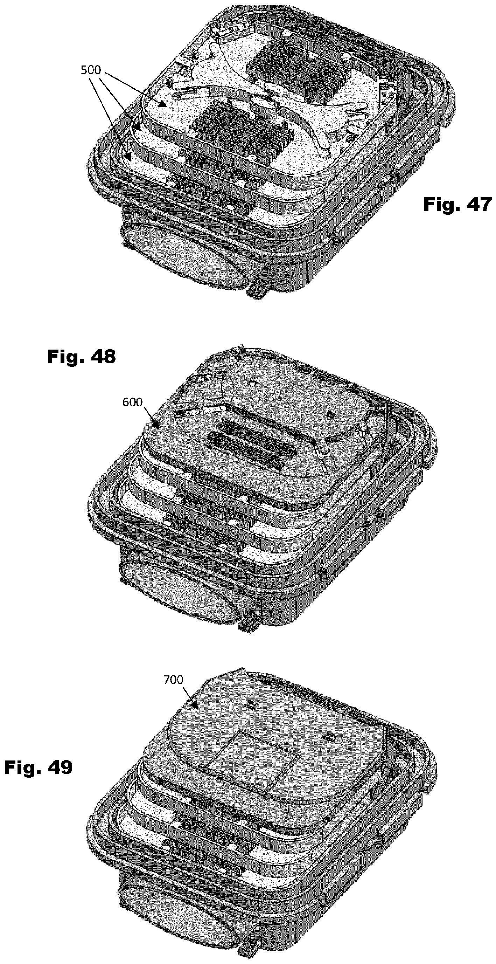

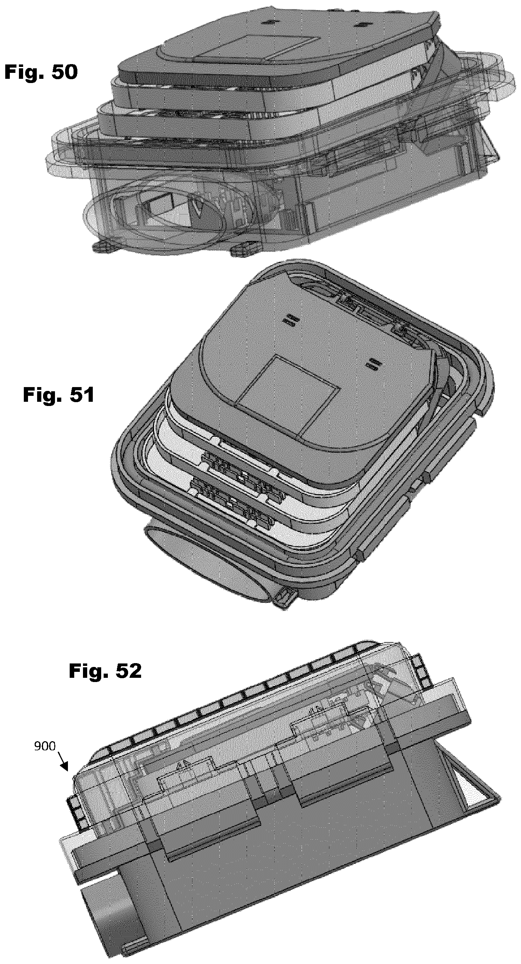

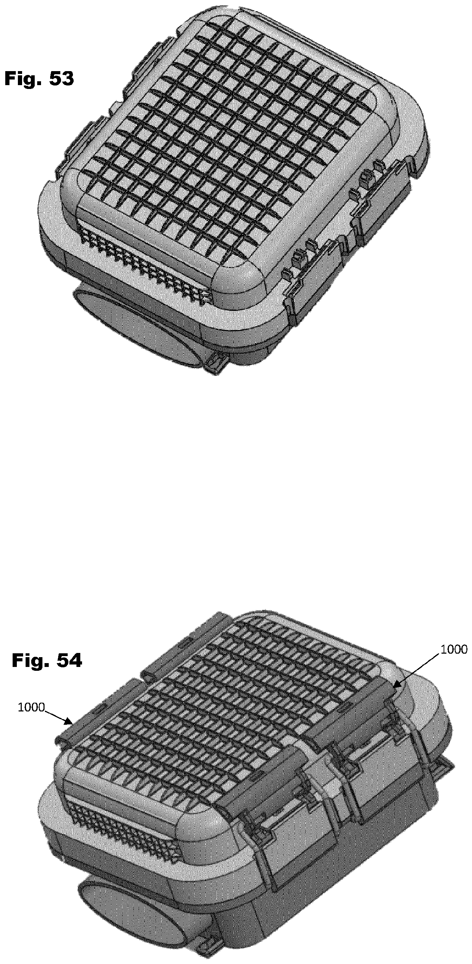

Figs. 41-54 show successive stages in the assembly of the individual components in an enclosure, with each additional component as described above, being added into the enclosure to result in a fully assembled enclosure.

### Second Embodiment

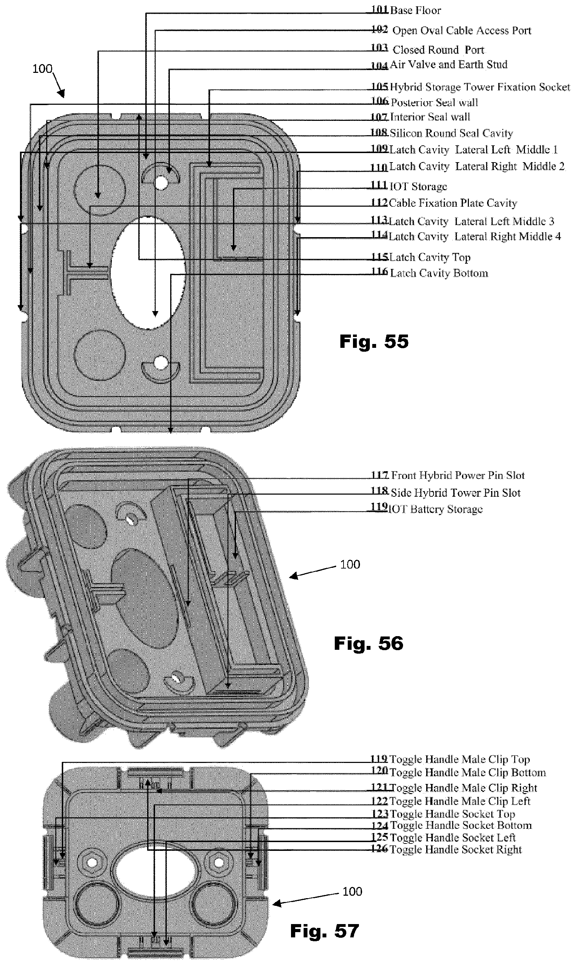

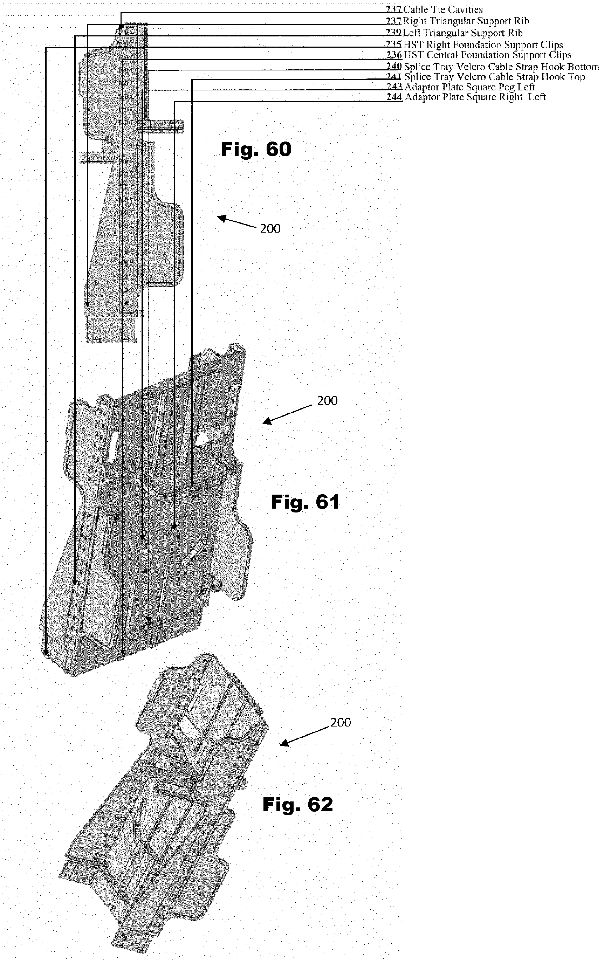

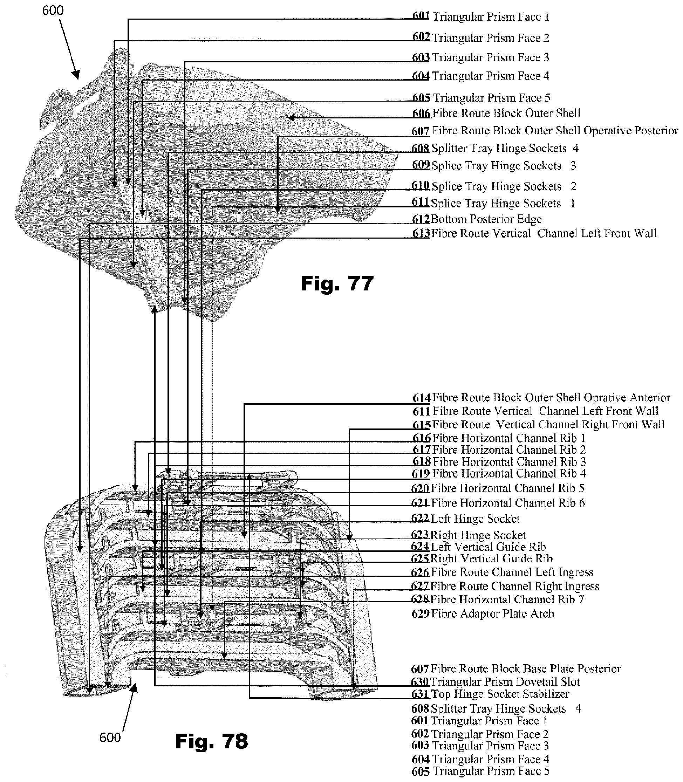

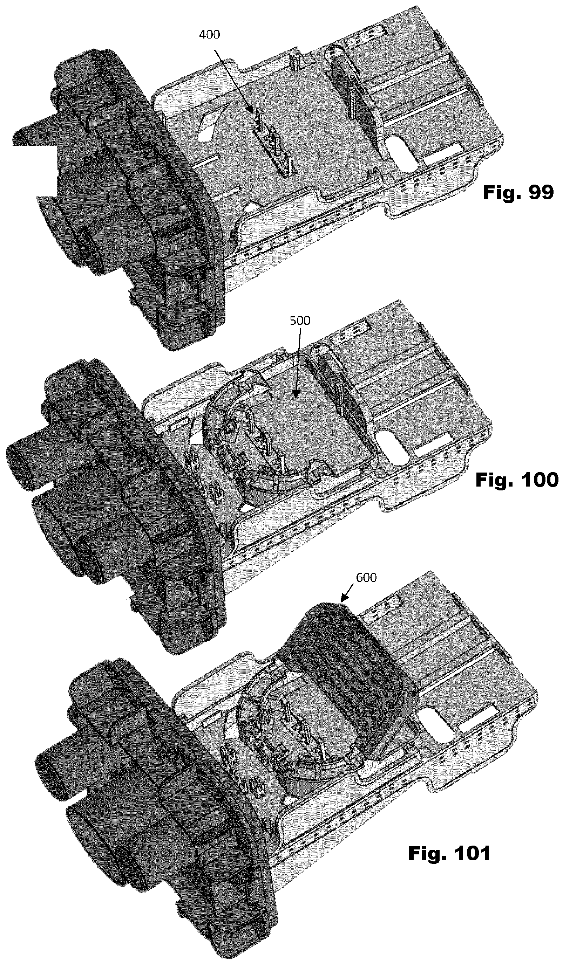

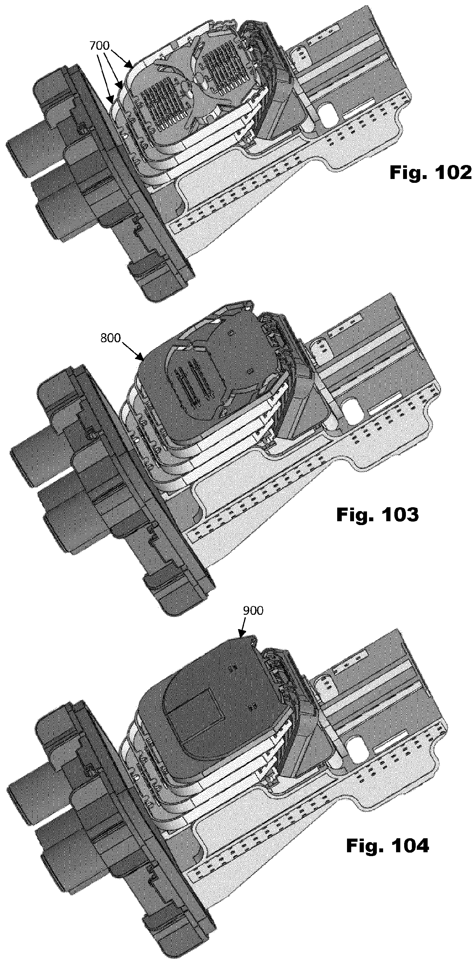

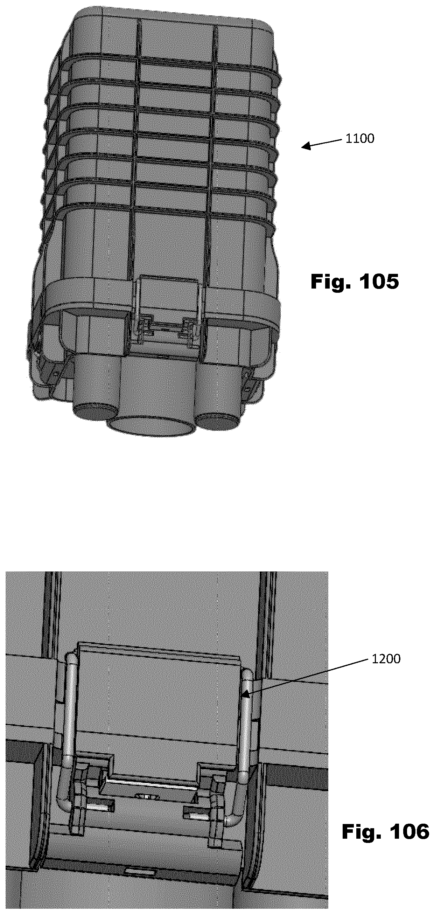

In the second embodiment of Figs. 55-106, the numbering of components restarts at 100, and is therefore not to be confused with the numbering of components used in Figs. 1-54. L:ike reference numerals in the description that follows do not necessarily denote the same components as in the preceding description.

### DOME BASE

In Figs. 55-57 a Fibre Dome Base, in accordance with an embodiment of the invention, is generally described with reference to numeral 100. The dome base encompasses holding area on the operatively anterior of the embodiment for a cable fixation plate, hybrid storage tower fixation system and an air valve cavity. On the operatively posterior end of the fibre dome base are two circular round ports on one opened ended oval shaped port.

The dome base 100 contains a Dome Base Floor 101 and bottom side 1 opened ended oval cable access port 102 with two closed ended circular round cable access port 103.

The dome base 100 further contains an air valve and earth stud cavity 104 located on the lateral top end and the lateral bottom end of the dome base 100.

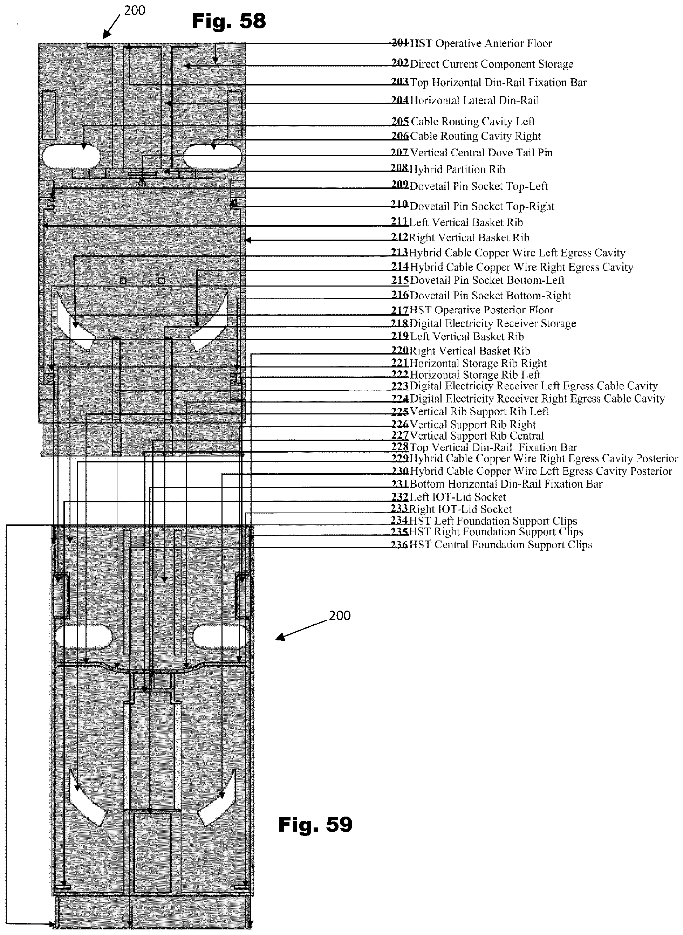

At 105 of the dome base 100 is a hybrid storage tower fixation socket comprised a front hybrid tower pin slots 117,118 and 119 the hybrid tower pin slots establish the arrangements for the Fibre Optic Hybrid Storage Tower (HST) described in Figs. 58-62 encompassing the hybrid tower foundation clips to couple together forming one solid structure.

The dome base 100 further contains a posterior seal wall 106 with a vertical parallel alignment to the interior seal wall 107 which establishes the arrangement for the silicon seal cavity 108.

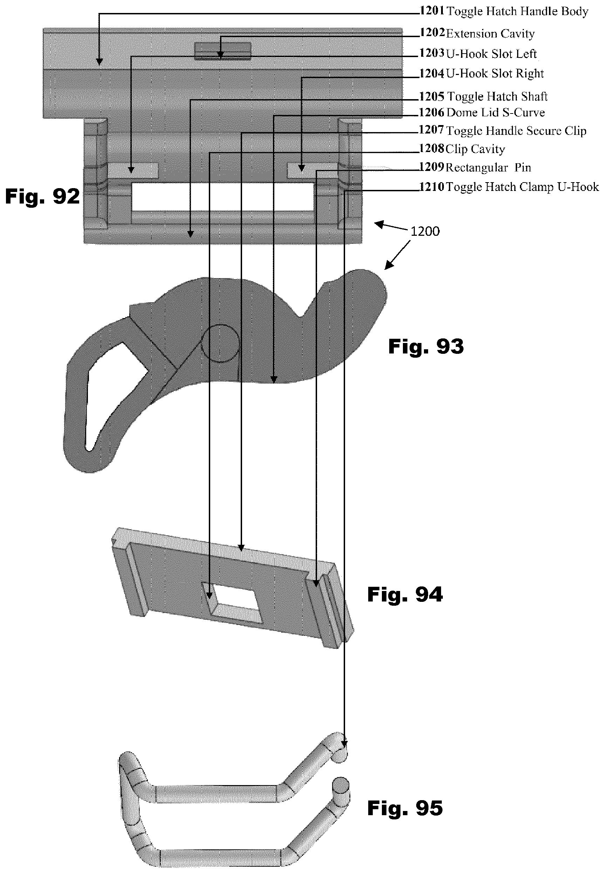

At 109 the dome base 100 contains latch cavity lateral left middle (1) and latch cavity lateral right middle (2) 110 with a further latch cavity lateral left middle (3) 113 and latch cavity lateral right middle (4) 114 encompassing toggle handle sockets123,124,125,126 for engagement with Toggle Hatch Clamp System (THC) described in Figs. 92-95.

At 119 of the dome base 100 is a toggle handle male clip top, bottom 120, right 121 and left 122. These establish the arrangement for the toggle handle secure clip described in the Toggle Hatch Clamp System (THC) of Figs. 92-95 to catch the toggle handle in a final permanent position within the toggle handle socket cavity (123,124,125 and 126) whilst also permitting free movement.

The dome base 100 contains a cable fixation plate cavity 112 which establishes the arrangement for a metal cable fixation bar to be coupled with and secure fibre cable Kevlar yarn to the fixation bar.

The dome base 100 further contains at 111 a IOT storage box comprising IOT battery storage 119 IOT storage is formed with the operative posterior wall from the hybrid storage tower fixation socket.

### HYBRID STORAGE TOWER (HST)

In Figs. 58-62 a Hybrid Storage System is generally described with reference to numeral 200. The HST encompasses five main storage compartments with each compartment specifically assigned to hybrid fibre optic applications and digital electricity electrical component regulative requirements. There are two operative sides; the operative anterior end is subdivided into two compartments and the operative posterior end is subdivided into 3 individual compartments.

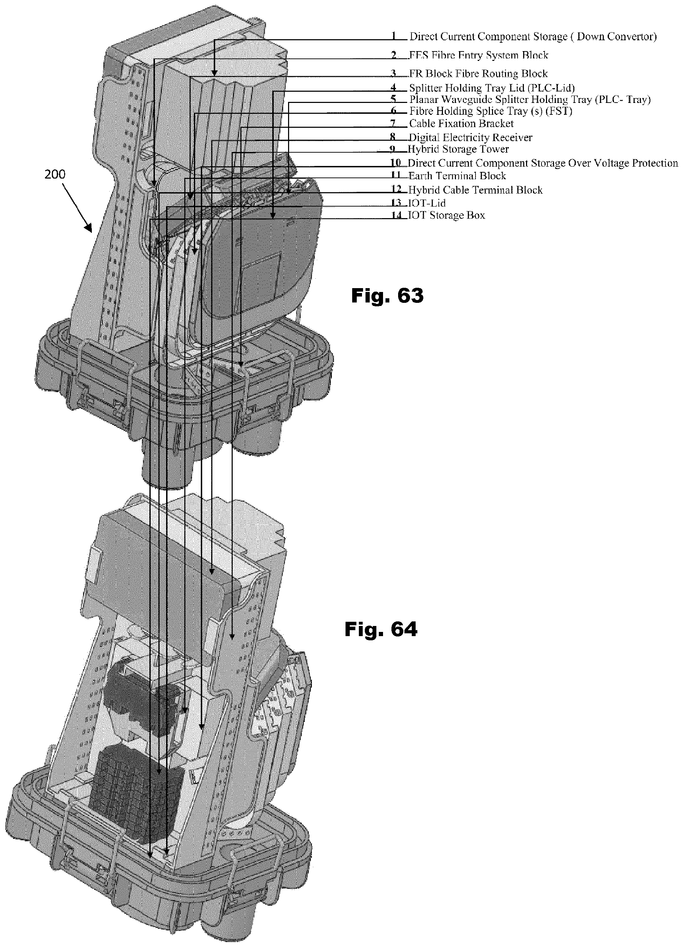

Figs. 63-64 show the system 200 with the optical and electrical components assembled in place.

The hybrid storage system 200 contains a hybrid storage tower operative anterior floor at 201 encompassing a direct current storage area 202 at the operative top end of the hybrid storage system 200.

At 203 of the hybrid storage system 200 is a top horizontal din-rail fixation bar comprising horizontal lateral din-rails, the partitioned horizontal fixation establishes the first arrangement of hybrid storage between the fibre optic cables and the milliwatt electrical components. The horizontal din-rail fixation is generally reserved for an electricity down convertor and the regulation of direct current.

The hybrid storage system 200 furthermore contains a cable routing cavity left 205 and a routing cavity right 206 which provisionally allows for the routing of power cables to the milliwatt electrical components from the main hybrid cable input.

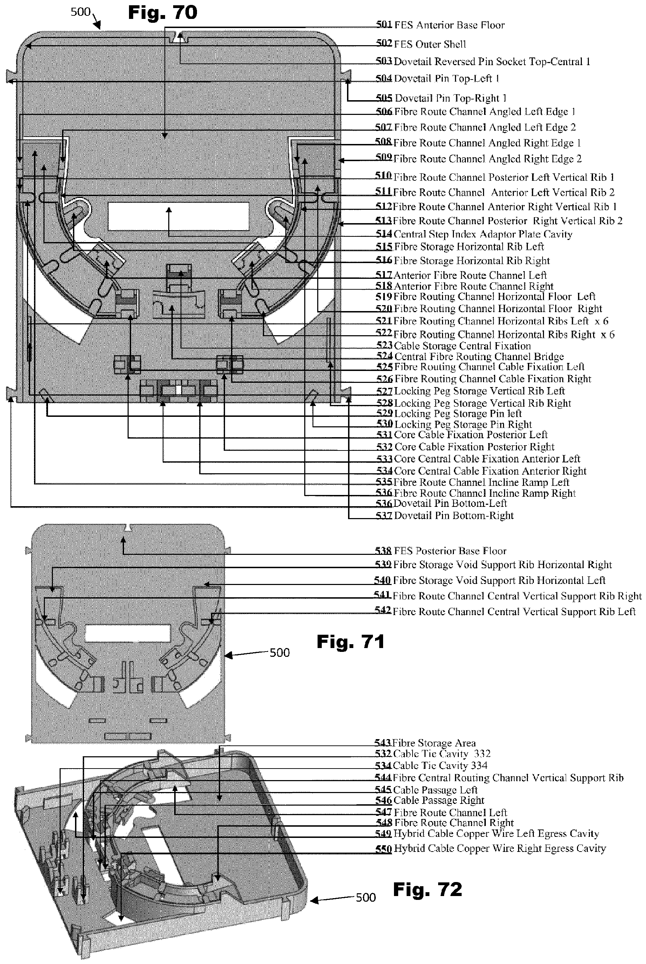

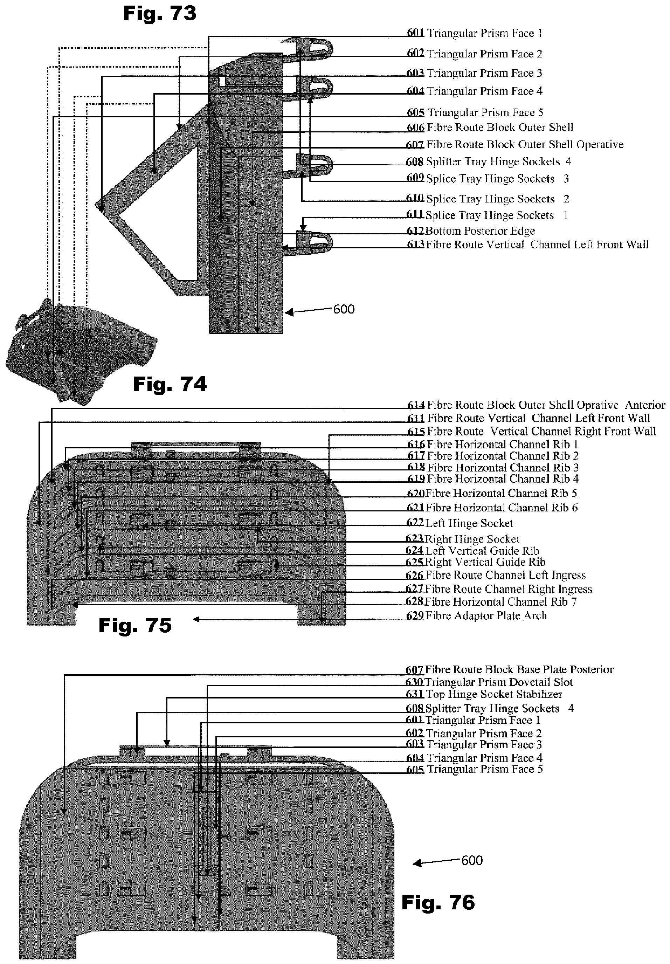

The hybrid storage system 200 contains a vertical central dovetail pin comprising hybrid partition rib 208. The relative location of the dovetail pin top central establishes the structural integrity with an exclusive central affixation between the Fibre Entry System Block FES Block) described in Figs. 70-72 with a vertically alignment to the Fibre Routing Block (FR Block) describe in Figs. 73-78. With the hybrid partition a clear demarcation between electrical components and fibre optic cable.

The hybrid storage system 200 further contains a dovetail pin socket top-left 209 and a dovetail pin socket top right 210, the dovetail joints 209 and 210 are directly attached to the HST operative anterior floor and are horizontal aligned with each other.

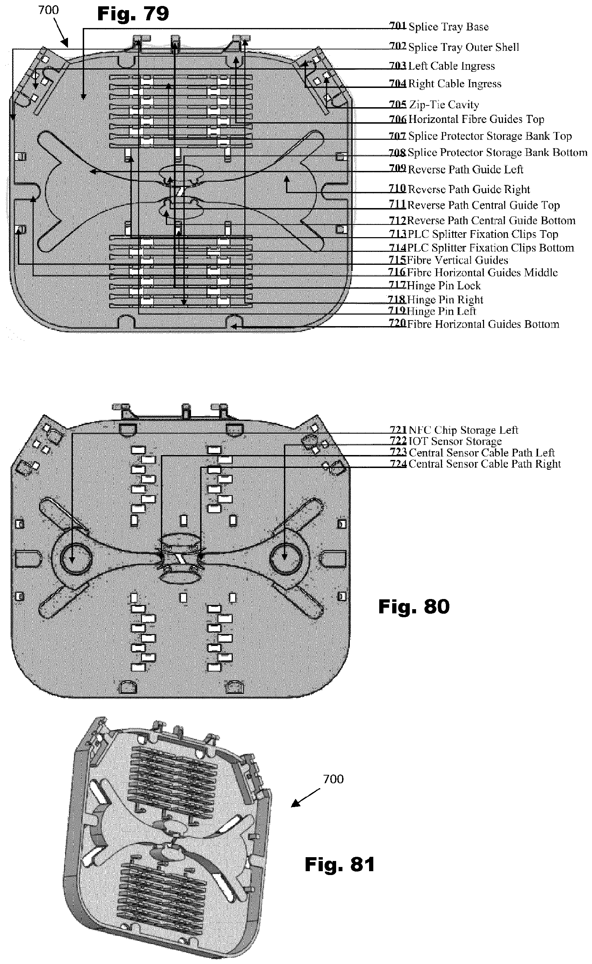

At 211 of the hybrid storage system 200 is a left vertical basket rib 211 located on the left edge of the HST operative anterior floor encompassing a symmetrical right vertical basket rib 212 on the right side of the HST operative anterior floor. These establish the arrangement for the Fibre Holding Splice Tray (s) (FST) described in Figs. 79-81 to be parallel and coincident with the vertical support ribs critically elevating the most bottom splice tray. The relative location of the left and right vertical ribs establishes the structural integrity for the dovetail pin sockets with an exclusive central affixation between the Fibre Entry System Block FES Block) described in Figs. 70-72 and the HST operative anterior floor.

The hybrid storage system 200 contains hybrid copper wire left egress cavity 213 and a hybrid copper wire right egress cavity 214, which with the speculum cavities in the Fibre Entry System Block FES Block described in Figs. 70-72 provisionally segregates the fibre optic strands and the copper strands from the hybrid fibre optic cable. The copper strands will be efficiently routed to the milliwatt component termination system described further on in the invention on the HST operative posterior end whilst the fibre strands will be efficiently routed within the Fibre Entry System Block FES Block) described in Figs. 70-72 to the Fibre Holding Splice Tray (s) (FST) described in Figs. 79-81.

Furthermore, the hybrid storage system 200 further contains a dovetail pin socket bottom-left 215 and a dovetail pin socket bottom-right 216, the dovetail joints 215 and 216 is directly attached to the HST operative anterior floor and are horizontal aligned with each other.

At 217 of the hybrid storage system 200 is the hybrid storage operative posterior floor comprising digital electricity receiver storage 218 at the operative top end.

The hybrid storage system 200 contains a Left vertical basket rib 219 and a right vertical basket rib 220 comprising a horizontal storage rib right 221 and horizontal storage rib left 222 which establish a casing for the digital electricity receiver which is exclusively positioned within the encasing as such that the egress electrical wires from the component are aligned with the digital electricity left egress cavity 223 and 224. Furthermore, once the digital receiver copper strands are terminated it will permanently secure the milliwatt component into its final position without the addition of peripheral fixation methods.

The hybrid storage system 200 contains a vertical rib support left 225 and a vertical support rib right 226 which support the structural integrity of the encased area where the milliwatt component will be stored.

At 225 of the hybrid storage system 200 is a top vertical din-rail fixation bar comprising vertical support rib left 225, vertical support rib right 226 and vertical support rib central 227 directly attached to 225 and 226 to strengthen the structural integrity.

In this embodiment of the invention the relative location of the top vertical din-rail fixation bar establishes the arrangement of the transposable electrical components to be fixated horizontally to the HST operative posterior floor.

The hybrid storage system 200 also contains a bottom horizontal din-rail fixation bar 231, which establishes the arrangement for a partitioned and combined storage method along with the top vertical din-rail fixation bar 228 providing a critical contribution to adequately store peripheral electrical components in compact modular patterns and efficiently regulate and integrate various electrical component systems.

With the hybrid storage system 200 a critical central alignment between the operative posterior hybrid cable copper wire egress cavities 229 and 230 and the din-rail storage bars 228 & 231 of the invention it establishes the arrangements for the interconnecting of copper wires to the horizontally stored milliwatt electrical components and the peripheral electrical components stored vertically to the HST operative posterior floor

The hybrid storage system 200 contains a left IOT-lid Socket and a right IOT-lid socket which secures the IOT box protection lid.

Furthermore, the hybrid storage system 200 contains HST left, right and central foundation support clips 234,235 and 236 which will slot inside the hybrid storage tower fixation socket and couple directly with the hybrid power pins slots described in 117,118 and 119 this coupling secures the structural integrity of the invention providing the platform for the modular system hybrid fibre optic system.

The hybrid storage system 200 contains at 237 cable tie cavities on each operative posterior side the cable tie cavities forming a grid which establishes the arrangement for cable management to segregated and partitioned according to the final termination position

At 237 of the hybrid storage system 200 is a right triangular support rib and a left triangular support 239 which establishes an evenly weight distribution throughout the invention when populated with electrical components described above.

The hybrid storage system 200 contains a splice tray velcro strap hook bottom 240 and a splice tray velcro hook to secure the fibre holding splice trays onto the HST.

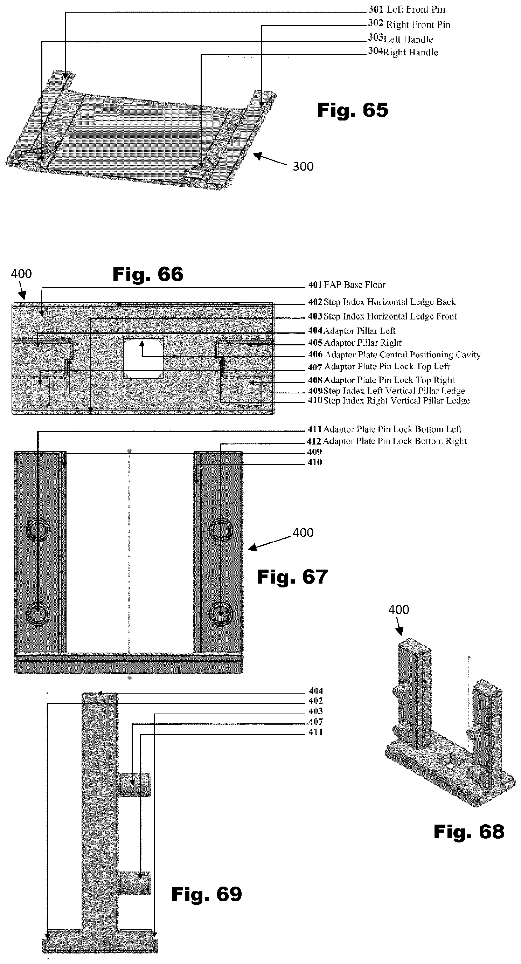

At 242 the hybrid storage system 200 contains an adaptor plate square peg left and symmetrical to horizontal right adaptor plate square peg right 243, which establishes the arrangements for the Fibre Adaptor Plate (FAP) described in Figs. 66-69 to be positioned precisely.

### IOT STORAGE BOX LID (IOT-LID)

In Fig. 65 an IOT-lid is generally described with reference to numeral 300. The IOT-lid 300 contains a left front pin 301 and right front pin 302 to couple with the IOT lid sockets 232 and 233 securing IOT sensors within the IOT box of Figs. 55-57.

Furthermore, the IOT-lid 300 contains a left handle 303 and a right handle 304 to assist with fitting and removal.

### FIBRE ADAPTOR PLATE

In Figs. 66-69 a Fibre Adaptor Plate is generally described with reference to numeral 400. The fibre adaptor plate encompasses four adaptor pins located on the vertical left pillar and the vertical right pillar.

The fibre adapter plate 400 contains a Fibre Adaptor Plate Floor 401 and a lateral back step index horizontal ledge 402 with a lateral front step index horizontal ledge 403. In this embodiment of the invention the step index ledge establishes a secure lock for the upper next component the Fibre Entry System Block FES Block) described in Figs. 70-72.

Furthermore, the fibre adapter plate 400 contains an adaptor plate pillar left 404 located at the posterior most left edge with a symmetrical adaptor plate pillar right 405 located at the posterior most right edge with the pillars in symmetrical vertical establishment it arranges for the fibre optic adaptor couplers to be positioned coincidently and centrally between the pillars.

The fibre adapter plate 400 contains an adaptor plate central positioning cavity 406 to be coincidently individually coupled at 242 and 243 of hybrid storage system 200, with this coupling the fibre adapter plate 400 is precisely positioned to be coupled into the upper next component the Fibre Entry System Block FES Block) described in Figs. 70-72.

At 407 the fibre adapter plate 400 contains an adaptor plate pin lock top left and symmetrical horizontally an adaptor plate pin lock top right 408, which secures the fibre coupler into a top central position.

The fibre adapter plate 400 contains at 409 a step index left vertical pillar ledge and at 410 a step index right vertical pillar ledge, the two ledges parallel with each other establishes the arrangements for the fibre couplers to be inter-locked to the fibre adapter plate.

At 411 the fibre adapter plate 400 contains an adaptor plate pin lock bottom left and symmetrical horizontally an adaptor plate pin lock bottom right 412, which secures the fibre coupler into a bottom central position.

### FIBRE ENTRY SYSTEM (FES) BLOCK

In Figs. 70-72 a Fibre Entry System (FES) block is generally described with reference to numeral 500. The FES block contains a fibre storage at the operatively anterior front. The fibre storage area establishes the original pathway for the fibre routing channels at the operative anterior middle encompass a fibre fixation system to the fibre routing channel. A fibre entrance and fixation at the operatively anterior bottom.

The FES block 500 encompass FES anterior base floor at 501, and a FES block FES outer shell at 502.

At 503 of the FES block 500 is a dovetail reverse pin socket top-central, the dovetail pin reverse socket is a central colocation with the Fibre Routing (FR) Block described in Figs. 73-78 of the invention. The dovetail pin reverse socket couples with 207 dovetail pin top-central in Figs. 58-62.

The FES block 500 contains a dovetail pin top left 504 and a dovetail pin top right 505, the dovetail pin top left 504 will couple with dovetail pin socket top left 209 of Figs. 58-62 and dovetail pin top-right dovetail 505 coupled with dovetail pin socket top right 210 of Figs. 58-62.

Furthermore, the FES block 500 contains a fibre route channel angled left edge (1) 506 and fibre route channel angled left edge (2) 507 to establish the arrangement of the coupling for the bottom operative posterior angled left edge of the Fibre Route (FR) block described in Figs. 73-78 of the invention, the coupling of the components of Figs. 70-72 and Figs. 73-78 will form a secure left-side pathway for fibre cores to be routed to their respective splice and termination position.

The FES block 500 contains a fibre route channel angled right edge (1) 508 and fibre route channel angled right edge (2) 509 to establish the arrangement of the coupling for the bottom operative posterior angled right edge of the Fibre Route (FR) block described in Figs. 73-78 of the invention, the coupling of the components of Figs. 70-72 and Figs. 73-78 will form a secure right-side pathway for fibre cores to be routed to their respective splice and termination position.

At 510 of the FES block 500 is a fibre route channel posterior left vertical rib (1) and a fibre route channel anterior left vertical rib (2) 511 to create a channel to the left vertical off-center furthermore at 512 of the FES block 500 is a fibre route channel anterior right vertical rib (1) and a fibre route channel posterior right vertical rib (2) 513 to create a channel to the right vertical off-center.

The FES block 500 contains a central step index adaptor plate cavity at 514, the step index ledge will couple with the step index horizontal ledge back (402) of the FAP and the step index horizontal ledge front (403) of the FAP to secure the FAP into a permanent position locking the FAP between the components of Figs. 58-62 and Figs. 70-72 without the assistance of any mechanical screws.

A fibre storage horizontal rib left 515 and fibre storage horizontal rib right (516) with a primary function to extend the fibre storage void established at the bottom posterior of the left fibre route-channel and the bottom posterior right of the fibre route-channel and contain the fibre cable into the fibre storage area , with a secondary function in the separation between the fibre storage area and the pathway to the upper anterior fibre route-channel left 517 and the upper anterior route channel right.

At 517 of the FES block 500 is an anterior fibre route channel left and at 518 a anterior fibre route channel right with a very specific angle an position with alignment to the central fibre routing channel, this second division between fibre storage area and the fibre route channels secures the fibre buffer tubes to be routed to the central core cable fixation.

Furthermore FES block 500 contains a fibre routing channel horizontal floor left 519 and fibre routing channel horizontal floor right 520 with an operative posterior bottom that establishes the arrangement for a storage void horizontal containment with the FES anterior base floor and an operative anterior the establishes the arrangement of a base floor for the fibre route-channels at 521 the fibre routing horizontal ribs left and the fibre routing channel horizontal ribs right 522 creates containment for the fibre buffer tubes at the operative anterior of the fibre routing-channels

The FES block 500 contains cable storage central fixation 523 encompassing a cavity void that establishes the arrangement for a zip-tie to be wrapped around the buffer tubes to be fixated, the V-groove accommodates different size tubes in one position. With the cable storage central fixation, throughput fibre buffer tubes will be contained.

The FES block 500 contains a central fibre routing channel bridge 524 which arranges fibre buffer tubes to break-out and channeled in alignment with the Fibre route channel left and right. The primary function is to ensure buffer tubes are secured and bridged over lower lateral ingress cables.

Furthermore, the FES block 500 contains at 525 fibre routing channel fixation left and at 526 fire routing channel fixations right, the V-groove accommodates different size tubes in one position, this is the central fixation for fibre buffer tubes to be routed into their respective splice position.

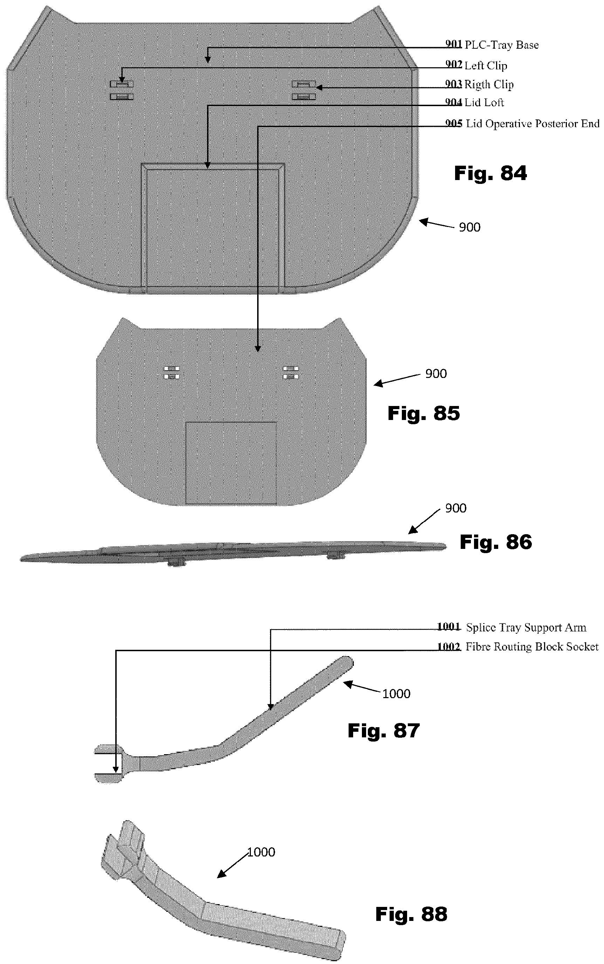

The FES block 500 contains a locking peg storage vertical rib left 527 and locking peg storage vertical rib right 528 which create a secure cavity with the FES outer shell 502 for storing a Locking Peg (LP) described in Figs. 87-88. Furthermore, the FES block 500 contains a locking peg storage pin left 529 and a locking peg storage pin right 530 to be coupled with the locking peg socket for secure fixation.

At 531 of the FES block 500 is a core cable fixation posterior left encompassing a cavity void that establishes the arrangement for a zip-tie to be wrapped around the ingress cable for fixation, and latterly horizontal to 531 a core cable fixation posterior right 532 encompassing a cavity void that establishes the arrangement for a zip-tie to be wrapped around the buffer tubes to be fixated, the said V-groove accommodates different size tubes in one position.

At 533 of the FES block 500 is a core central cable fixation anterior left encompassing a cavity void that establishes the arrangement for a zip-tie to be wrapped around the ingress cable for fixation, and directly attached to 533 a core central cable fixation anterior right 534 encompassing a cavity void that establishes the arrangement for a zip-tie to be wrapped around the buffer tubes to be fixated, the said V-groove accommodates different size tubes in one position.

The FES block 500 contains a fibre route channel incline ramp left 535 and fibre route channel incline ramp right 536 which attach directly to the FR block described in Figs. 73-78 and establishes a arrangement for smooth transition for the fibre cores final routing and termination location.

The FES block 500 contains a dovetail pin bottom left 536 and a dovetail pin bottom right 537, the dovetail pin bottom left 536 will couple with dovetail pin socket top right 215 of Figs. 58-62 and dovetail pin bottom right 537 coupled with dovetail pin socket top left 216 of Figs. 58-62. The precise alignment ensures the embodiment has no requirement for any mechanical screws.

At 538 of the FES block 500 is the FES posterior base floor.

At of the FES block 500 is a fibre storage void horizontal rib right 539 and fibre storage void rib horizontal left 540 with the said embedment it has an operational posterior function as the containment truss for the storage void

The FES block 500 contains a fibre route channel central vertical support rib right 541 and fibre route channel central vertical support rib left 542 which establishes the foundational structure for the fibre route channel 547 and 548 it further establishes the arrangement in the form of a minimum bend-radius guide support for the fibre buffer tubes storage area.

The FES block 500 contains a fibre storage area 543 defined by 502,539,540,541 and 542 furthermore the support from the Fibre Routing (FR) Block in Figs. 73-78 will create a total spring coil compressor for the natural spring in fibre buffer tubes to be stored.

The FES block 500 contains a fibre central channel vertical support rib 544 will encompass 524, and is a central Division for cable passage left 545 and cable passage right 546. The cable passage will arrange for

ingress cable to be routed safely to their respective termination and storage location.

The FES block 500 contains a fibre route channel left 547 and a fibre route channel right 548 that will couple with the Fibre Routing (FR) Block described in Figs. 73-78 to arrange for a singular routing system combined for fibre cores to their final termination position. The FES block 500 contains hybrid copper wire left egress cavity 549 and a hybrid copper wire right egress cavity 550, which with its speculum cavities in the HST (213 & 214) described in Figs. 58-62 it provisionally segregates the fibre optic strands and the copper strands from the hybrid fibre optic cable. The copper strands will be efficiently routed to the milliwatt component termination system described above in the invention on the HST operative posterior end whilst the fibre strands will be efficiently routed within the Fibre Entry System Block FES Block) described in Figs. 70-72 to the Fibre Holding Splice Tray (s) (FST) described in Figs. 79-81.

### FIBRE ROUTING (FR) BLOCK

Figs. 73-78 show a Fiber Routing Block 600. The PLC tray 600 contains a triangular prism face (1) 601, Directly attached to the operative posterior of the FR base plate.

At 602 of the PLC tray 600 is triangular prism face (2) this face of the triangular prism is at a 48-degree angle offset to triangular prism face (1) 601, this precise angle establishes the arrangements for the Fibre Holding Splice Tray (s) (FST) described in Figs. 79-81, to be staggered in a step indexed compact manner on top of each other to create a higher density fibre cable application for the invention.

Furthermore, comprising of a dovetail slot (631) to directly couple with the Figs. 58-62 component dovetail pin top-central (207) above the FES block described in Figs. 70-72.

The PLC tray 600 contains a triangular prism face (3) this face of the prism establish a truss at the top end of the FES block it completes the fibre storage area in the FES block (Comprising the route channel Left & right, the Outer shell and triangular prims face 3, fibre buffer tubes will be pushed in under face 3 which will contain the natural spring resistance of fibre buffer tubes into the fibre storage area without any means of mechanical fixation like a zip tie.

At 604 of the PLC tray 600 is a triangular prism face (4) and a triangular prism face (5) 604

The PLC tray 600 contains a fibre route block outer shell (606) this shell is the operative posterior vertical wall for the fibre route channel on the left and right side of the FR block. Furthermore at 607 is the fibre route block outer shell operative posterior attached to this is the triangular prism face 1.

The PLC tray 600 contains splitter tray hinge socket (4) 608 located at the top of the FR block also at 609 splice tray hinge socket (3), 610 splice tray hinge socket (2) and 611 splice tray hinge socket (1) which establish the arrangements for the direct coupling to the Fibre Holding Splice Tray (s) (FST) described in Figs. 79-81.

At 612 of the PLC tray 600 is the bottom posterior edge of the FR block routing channels, which will have a direct coupling with the FES block fibre route channel angled edge 506,507,508 and 509. The coupling will offer structural support to the FR block taking strain away from the central dovetail joint between the components of Figs. 58-62 and Figs. 73-78, with the extended fibre route channel from the FES block into the FR block to create one fibre routing system for fibres to be routed to and from any splice position.

The PLC tray 600 contains a fibre vertical channel left front wall 413 and a fibre route channel vertical right 615 front encompassing the outer shell to form a vertical fibre route channel.

At 614 of the PLC tray 600 is the FR block outer shell operative anterior the outer shell which establishes the arrangement for the Fibre horizontal channel ribs 616,617,618,619,620 and 621 which are horizontally aligned with the Fibre Holding Splice Tray (s) (FST) described in Figs. 79-81 for fibre cores to be routed to their respective termination position and also creates a transient free path for fibres to be transported to any other termination position without the need for any transportation tubing.

The PLC tray 600 contains a left vertical guide rib 625 and a right vertical guide rib which will retrain core fibres to their respective channel.

At 626 of the PLC tray 600 is the fibre route channel left ingress point and at 627 is the fibre rout channel right ingress point.

The PLC tray 600 contains a fibre horizontal channel rib (7) 628 and a fibre adaptor plate arch 629 which establishes the arrangement for the internal connected fibres to adhere with minimum bend radius rules.

At 630 of PLC tray 600 is a dovetail slot joint with the dovetail slot set a specific depth for the most bottom Fibre Holding Splice Tray (s) (FST) described in Figs. 79-81.

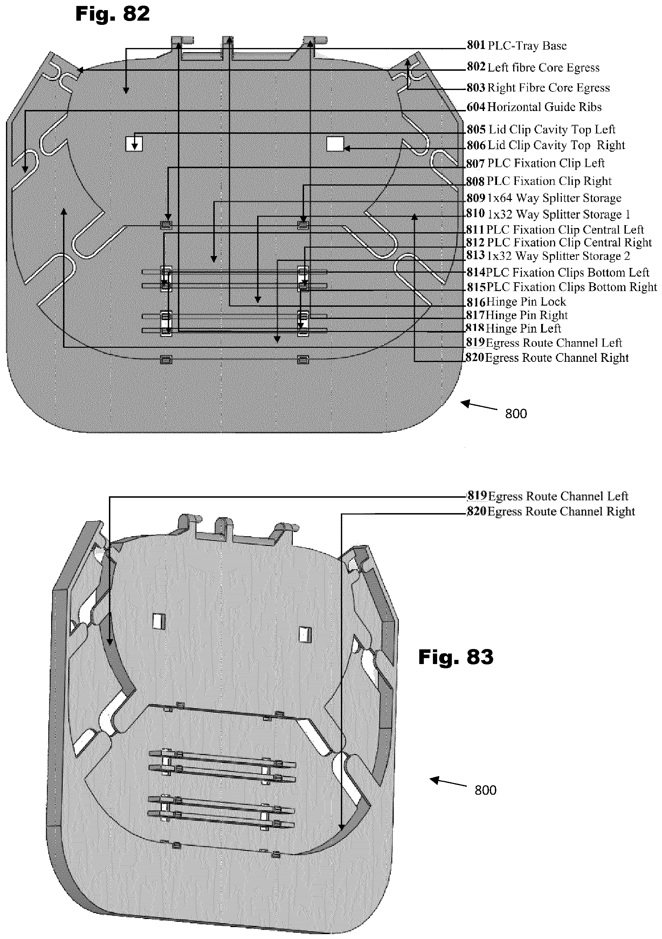

The PLC tray 600 contains a top hinge socket stabilizer that horizontally attaches the top hinges together and secures stability of the Planar Waveguide Splitter Holding Tray (PLC- Tray) described in Figs. 82-83.

### FIBRE HOLDING SPLICE TRAY (FST)

Figs. 79-81 show a Fibre Holding Splice Tray (s) (FST) 700.The FST 700 contains a splice tray base 701 and a splice tray outer shell 702 this establishes the foundation for the splicing components.

At 703 of the FST 700 is a left cable ingress comprising of horizontal cable guides and zip-tie cavities which establishes the arrangement for transient free fibre routing as a primary function but also the fixation of buffer tubes during midspan cable access.

At 704 of the FST 700 is a right cable ingress comprising of horizontal cable guides and zip-tie cavities 705 which establishes the arrangement for transient free fibre routing as a primary function but also the fixation of buffer tubes during midspan cable access.

The FST 700 contains horizontal fibre guides top 706 with the primary function to contain fibre cores within the boundary of the splice tray outer shell and the splice protector storage bank top.

The FST 700 contains a splice protector storage bank top 707 and at 708 a splice protector bank bottom which establishes the arrangement for fibre splice protectors to be stored.

At 709 of the FST 700 is a revers path guide left and at 710 reverse path guide which is centrally located to the splice tray to allow fibres to be routed in a reversed direction furthermore the FST 700 contains a revers path central guide top 711 and a reverse path central guide bottom.

At 713 of FST 700 is a PLC (Planar Waveguide Circuit) splitter fixation clips top comprising of three clips parallel and horizontally to the splice bank top 5

707 using the splice bank lower vertical rib as a support back wall to house a 4x4x40 mm splitter.

The FST 700 contains a PLC (Planar Waveguide Circuit) splitter fixation clips bottom 714 comprising of three clips parallel and horizontally to the splice bank bottom 708 using the splice bank upper vertical rib as a support back wall to house in a 4x4x40 mm splitter.

At 715 of the FST 700 is the fibre vertical guides located at the operative anterior of the outer shell on the right and left side of the fibre splice tray, which establish the arrangements for fibre ingress or egress cores to be transported on the outer edge of the splice tray as to distinguish between PLC circuits and distribution cable circuits.

The FST 700 contains at 516 Fibre horizontal guides middle with the primary function of containing fibres cores managed within the splice tray.

At 717 of the FST 700 is a hinge pin lock and a hinge pin right 718 with a hinge pin left 719 directly attached to the operative posterior top of the outer shell which establish the arrangement to couple the splice tray to the splice tray hinge sockets.

The FST 700 contains horizontal fibre guides bottom 720 with the primary function to contain fibre cores within the boundary of the splice tray outer shell and the splice protector storage bank bottom end.

At 721 of the FST 700 is an NFC (near field communication) chip storage location left which is directly attached at the operative posterior end of the revers path guide right 710.

At 722 of the FST 700 is a IOT sensor storage location, which is directly attached at the operative posterior end of the reverse path guide left 709. Furthermore, the FST 700 contains at 723 a central sensor cable path left and at 24 a central cable path right for the transportation of sensor cables between the IOT sensor storage and the NFC chip storage left.

### PLANAR WAVEGUIDE SPLITTER HOLDING TRAY (PLC-TRAY)

In Figs. 82-83 is shown the PLC Tray 800. The PLC tray 800 contains PPLC tray base 801 comprising a left fibre core egress 802 and a right fibre core egress 803 the egress path will transport fibres through the Figs. 73-78 component to its designated splice tray described in Figs. 79-81 for final splicing and storage.

At 804 of PLC tray 800 is horizontal guide ribs 804 the horizontal guide ribs contains the PLC fibre cores into the route channel. Furthermore, the PLC tray 800 contains lid clip cavity left 805 and a clip cavity right 806 for the Splitter Holding Tray Lid (PLC-Lid) described in Figs. 84-86 to be clipped into the cavity this will close of the PLC-tray and protect the passive components from any external forces damaging the fibre cores.

The PLC tray 800 contains PLC fixation clip top left 807 and its symmetrical opposite along with PLC central fixation clip top right 808 with its with its symmetrical opposite this establishes the arrangements for the 1x 64-way plc splitter to be secured into the 1x 64-way splitter storage 809 of the PLC-Tray.

At 810 of the PLC Tray 800is a 1x32 way splitter storage 1 encompassing PLC fixation clip central left 811 and its symmetrical opposite along with PLC central fixation clip central right 812 with its with its symmetrical opposite this establishes the arrangements for the 1 x 32-way plc splitter to be secured into the 1x 32-way splitter storage 810 of the PLC-Tray.

At 813 of the PLC Tray 800is a 1x32 way splitter storage 2 encompassing PLC fixation clip bottom left 814 and its symmetrical opposite along with PLC central fixation clip bottom right 815 with its with its symmetrical opposite this establishes the arrangements for the 1 x 32-way plc splitter to be secured into the 1x 32-way splitter storage 813 of the PLC-Tray.

At 816 of the PLC Tray 800 is a hinge pin lock and a hinge pin right 817 with a hinge pin left 818 directly attached to the operative posterior top of the PLC-Tray, which establish the arrangement to couple the splice tray to the splice tray hinge sockets.

The PLC tray 800 contains an egress route channel left at 819 and an egress route channel right 820 which provides a direct transport path for fibre cores to be routed to their final termination position.

### SPLITTER HOLDING TRAY LID (PLC-LID)

Figs. 84-86 show the Splitter Holding Tray Lid or PLC-Lid 900. The PLC-lid 900 contains a PLC-Tray base 901 comprised with a left clip 902 and a right clip 903 which will couple directly with the PLC-Tray 805 and 805. Furthermore, the PLC-lid 900 contains a lid loft 904 which create space for the PLC-Splitter clips as for the lid operative posterior end 905 to attached coincidently to the PLC-Tray.

### LOCKING PEG (LP)

Figs. 87-88 show the locking peg 1000. The locking peg 1000 contains a splice tray support arm 1001 at an angel the support arm locks the splice tray in an upright position providing that fibre management is made possible in lower splice tray and the fibre entrance system. Furthermore, the Locking peg contains a fibre routing block socket 1002 that directly couple with the fibre horizontal channel ribs in Figs. 79-81. In this way the support arm can be coupled with an underlying splice tray and used to prop up a higher splice tray to allow access to the underlying splice tray.

### DOME COVER

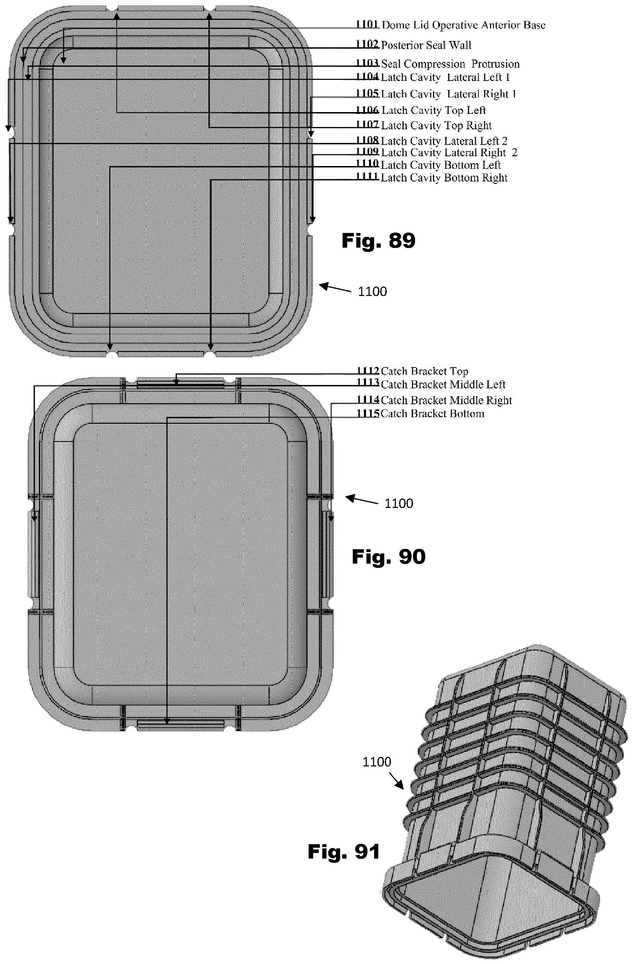

Figs. 89-91 show the Dome Cover 1100. The dome cover 1100 contains a dome lid operative anterior base 1101 comprising of a posterior seal wall 1102 and seal compression protrusion 1103 which establishes the arrangement to enclose the complete system forming a tight IP68 seal preventing any external forces from entreating the enclosure, the seal compression protrusion will slot in between 106 and 107 of Figs. 55-57 together with a Toggle Hatch Clamp System (THC) described in Figs. 92-95 compress round silicone O-ring seal to ensure its seals to IP68 standards.

Furthermore, the dome cover 1100 Contains at 1104 latch cavity lateral left (1) and latch cavity lateral left (2) 1108 comprising catch bracket middle left 1113 for engagement with Toggle Hatch Clamp System (THC) described in Figs. 92-95.

Furthermore, the dome cover 1100 Contains at 1105 latch cavity lateral Right (1) and latch cavity lateral right (2) 1109 comprising catch bracket middle left 1114 for engagement with Toggle Hatch Clamp System (THC) described in Figs. 92-95.

Furthermore, the dome cover 1100 Contains at 1106 latch cavity top left and latch cavity top right 1108 comprising catch bracket top 1112 for engagement with Toggle Hatch Clamp System (THC) described in Figs. 92-95.

Furthermore, the dome cover 1100 Contains at 1110 latch cavity top left and latch cavity top right 1111 comprising catch bracket top 1115 for engagement with Toggle Hatch Clamp System (THC) described in Figs. 92-95.

### TOGGLE HATCH CLAMP (THC) SYSTEM

As seen in Figs. 92-95, the Toggle Hatch Clamp System 1200 contains a toggle hatch handle body comprising an extension cavity 1202, u-hook slot left 1203, u-hook slot right 1204, toggle hatch shaft and a dome lid s-curve which establishes the arrangements for the toggle hatch clamp u-hook to be coupled together and placed in the toggle handle sockets (122-126) to be securely clipped into permanent position by the toggle handle secure clip.

### ASSEMBLY OF THE DEVICE

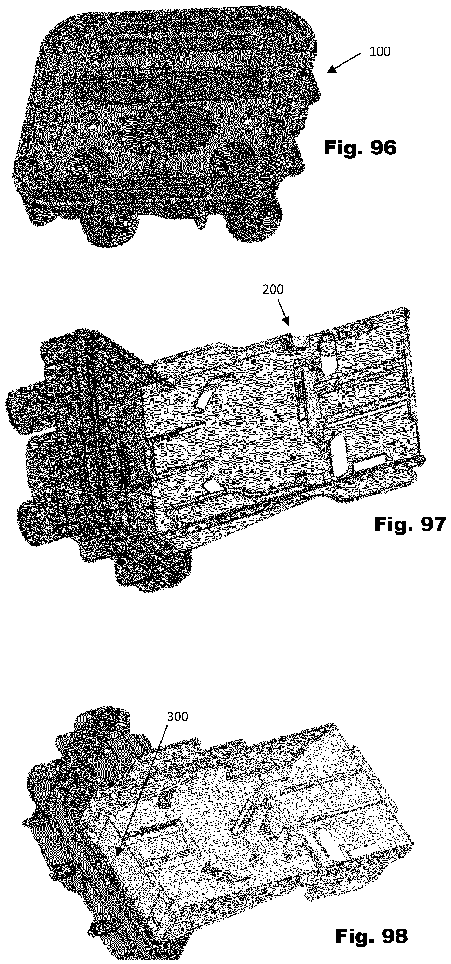

Figs. 96-106 show successive stages in the assembly of the individual components in an enclosure, with each additional component as described above, being added into the enclosure to result in a fully assembled enclosure.

### Clauses defining inventions and features thereof as disclosed herein

The following clauses define inventions and features of inventions that are disclosed herein and for which protection may be sought, without limiting the scope of this application to those features. The scope of the application is defined by the claims but protection may be sought for other features disclosed in the preceding description or in the clauses that follow:
Clause 1. An enclosure for terminating a hybrid power and fibre cable, comprising:
   a) a housing having an entry port for admitting a hybrid power and fibre cable of the type comprising at least one powered conductor and at least one optical fibre carried in a common sheath;
   b) a divider plate positioned adjacent the entry port for receiving and securing said hybrid cable thereto, the divider plate having a first side and a second side, wherein the divider plate comprises:
      i) a first conduit provided on the first side of the divider plate and having a first end and a second end, the first end being proximal to the entry port and the second end being distal from the entry port, wherein the first conduit is open along its length to admit an optical fibre laid lengthwise into and along the first conduit such that the fibre is guided from the first end to the second end, the first conduit being provided with means for retaining the optical fibre within the length of the first conduit; and
      ii) an opening in the plate between the first and second sides to permit passage either of the optical fibre from the second side to the first side, or of the powered conductor from the first side to the second side, whereby the optical fibre and the powered conductor may be separated from the one another and separately routed on opposite sides of the divider plate, the divider plate defining a fibre routing space within the housing on the first side thereof and a power conductor routing space within the housing on the second side thereof.
Clause 2. An enclosure according to clause 1, wherein the divider plate comprises securing means adapted to secure the hybrid power and fibre cable before the optical fibre and the powered conductor are separated from one another.
Clause 3. An enclosure according to clause 1 or 2, wherein the first conduit is a curved conduit which guides the optical fibre outwardly on the plate from a position closer to a mid-line of the plate between a pair of edges of the plate, to a peripheral position closer to one of said edges.
Clause 4. An enclosure according to clause 3, wherein the curved first conduit defines a portion of a boundary of a fibre storage area, the fibre storage area positioned inwardly of said boundary on the surface of the plate and defining a region within which a length of coiled optical fibre, continuous with a length of optical fibre disposed in the first conduit, may be accommodated and stored.
Clause 5. An enclosure according to any preceding clause, further comprising a fibre routing structure positioned relative to the first side of the divider plate to receive optical fibre from the second end of the first conduit and route the received optical fibre to a termination point.
Clause 6. An enclosure according to clause 5, wherein the fibre routing structure comprises a distribution conduit to receive optical fibre from the second end of the first conduit of the divider plate, and a plurality of fibre routing trays stacked in parallel with one another and each having a guided path positioned to receive optical fibre from the distribution conduit and guide said received optical fibre across the tray, whereby optical fibre may be selectively routed from the divider plate conduit, along the distribution conduit, to any of the fibre routing trays.
Clause 7. An enclosure according to clause 6, wherein a fibre termination device is provided on at least one of the fibre routing trays.
Clause 8. An enclosure according to clause 7, wherein said fibre termination device is a splicing component permitting splicing of said optical fibre to one or more other optical fibres.
Clause 9. An enclosure according to any of clauses 6-8, wherein the fibre routing structure comprises a fibre routing block on which said distribution conduit is provided, the fibre routing block being disposed within the housing relative to the divider plate such that the distribution conduit carries fibre away from the plane of the divider plate at an angle of between 20 and 70 degrees.
Clause 10. An enclosure according to clause 9, wherein the fibre routing block is provided with a plurality of fibre routing tray mounting points at different heights as measured in the direction normal to the plane of the divider plate.
Clause 11. An enclosure according to clause 10, wherein said fibre routing tray mounting points are hinged connections, permitting individual trays to be flipped between a raised position in which underlying structures are revealed, and a lowered position in which the trays lie parallel to the divider plate and underlying structures are concealed.
Clause 12. An enclosure according to any of clauses 9-11, wherein the fibre routing block is provided with a plurality of bridging conduits connected to the distribution conduit and extending in a direction parallel to the plane of the divider plate, such that a fibre carried in the distribution conduit may be directed selectively along any of the bridging conduits.
Clause 13. An enclosure according to clause 12, wherein a separate bridging conduit is provided at the level of each fibre routing tray, for carrying fibre from the distribution conduit to the guided path of the fibre routing tray.
Clause 14. An enclosure according to any of clauses 6-13, wherein the fibre routing block is provided with at least two distribution conduits spaced apart across the width of the fibre routing block as measured in a direction parallel to the plane of the divider plate, whereby one distribution conduit may carry a fibre from the divider plate to a fibre routing tray, and the other distribution conduit may carry the same fibre or a fibre spliced to said fibre from the fibre routing tray to the divider plate.
Clause 15. An enclosure according to any preceding clause, wherein the routing of an optical fibre between the entry port and a termination point is along a path which at no point has a bend radius less than the minimum bend radius threshold of an individual fibre strands.
Clause 16. An enclosure according to any preceding clause, wherein the enclosure further comprises an exit port for admitting the same or a different hybrid power and fibre cable.
Clause 17. An enclosure according to any preceding clause, wherein the divider plate comprises a second conduit provided on the first side of the divider plate and also having a first end and a second end, the first end being proximal to the entry port and the second end being distal from the entry port, wherein the second conduit is open along its length to admit an optical fibre laid lengthwise into and along the second conduit such that the fibre is guided from the first end to the second end, the second conduit being provided with means for retaining the optical fibre within the length of the second conduit.
Clause 18. An enclosure according to clause 17, wherein the second conduit is a curved conduit which guides the optical fibre outwardly on the plate from a position closer to a mid-line of the plate between a pair of edges of the plate, to a peripheral position closer to one of said edges.
Clause 19. An enclosure according to clause 17 or 18, when dependent on clause 3 or any clause dependent thereon, wherein the first and second conduits guide respective fibres outwardly on the plate towards opposite edges of the pair of edges
Clause 20. An enclosure according to any of clauses 17-19, wherein the curved second conduit defines a portion of a boundary of a fibre storage area, the fibre storage area positioned inwardly of said boundary on the surface of the plate and defining a region within which a length of coiled optical fibre, continuous with a length of optical fibre disposed in the second conduit, may be accommodated and stored.
Clause 21. An enclosure according to clause 20, when dependent on clause 3 or any clause dependent thereon, wherein the first and second curved conduits define respective portions of a boundary extending on either side of a mid-line of the plate.
Clause 22. An enclosure according to any of clauses 17-21, when dependent on clause 5 or any clause dependent thereon, wherein the fibre routing structure comprises a pair of distribution conduits each of which is disposed to receive optical fibre from the second end of a respective one of the first and second conduits of the divider plate, and wherein said plurality of fibre routing trays each has a guided path positioned to receive optical fibre from each distribution conduit.
Clause 23. An enclosure according to any preceding clause, further comprising a main support member mounted within the housing, the divider plate being mounted on the main support member.
Clause 24. An enclosure according to clause 23, wherein the main support member has an anterior face and a posterior face and divides the interior space within the housing into an anterior region and a posterior region, wherein the divider plate is mounted on the anterior face in the anterior region, and wherein the main support member is provided with one or more openings adapted to permit passage of a powered conductor from the divider plate to the posterior region.
Clause 25. An enclosure according to clause 24, wherein the anterior region is provided with fibre routing structures and is adapted to receive fibre termination components, and wherein the posterior region is provided with powered conductor routing structures and is adapted to receive powered conductor termination components.
Clause 26. A fibre routing structure for routing and terminating optical fibres within an enclosure, the structure comprising:
   a) a plurality of fibre routing trays each provided with one or more fibre routing guides which receive and guide a fibre across a surface of the tray from an entry point to an exit point, at least one of the fibre routing trays being provided with a mounting point for a fibre termination component;
   b) a tray support member on which each of the fibre routing trays is mounted, the tray support member comprising a plurality of fibre conduits providing routing paths between the fibre routing trays;
   wherein the fibre routing trays are mounted on the tray support member in a stacked configuration one above the other;
   wherein the fibre routing trays are mounted to the tray support member and extend therefrom in cantilevered fashion;
   wherein at least one of the fibre routing trays is hingedly mounted to the tray support member permitting it to be pivoted away from an adjacent underlying tray to reveal and provide access to the adjacent underlying tray and permitting it to be pivoted back to lie parallel to the adjacent underlying tray.
Clause 27. A fibre routing structure according to clause 26, wherein when in a working configuration all of the trays are disposed parallel to one another and each tray is successively displaced laterally relative to the next adjacent tray, such that the trays are provided in a stepped configuration.
Clause 28. A fibre routing structure according to clause 27, wherein the tray support member comprises a body on which the mounting attachments of the trays are disposed, wherein the mounting attachments are aligned along a plane that lies at an angle of between 20 and 70 degrees relative to the planes of the trays in the working configuration.
Clause 29. A fibre routing structure according to clause 28, wherein the tray support member comprises a base that is parallel to the plane of the trays in the working configuration and/or a rear support that is perpendicular to the plane of the trays in a working configuration.
Clause 30. A fibre routing system according to any of clauses 27-29, wherein each tray above the lowermost tray is hingedly mounted to the tray support, permitting it to be pivoted away from the working configuration to a routing configuration in which a user may access a lower tray to route a fibre thereon.
Clause 31. A fibre routing system according to clause 30, wherein the lowermost tray is hingedly mounted to the tray support, permitting it to be pivoted away from the working configuration to a routing configuration in which a user may access a region beneath the lowermost tray.
Clause 32. A fibre routing system according to any of clauses 26-31, wherein the uppermost tray is provided with a cover to secure and protect a fibre and any termination components carried on the uppermost tray.
Clause 33. A fibre routing system according to any of clauses 26-32, wherein each of said trays is provided with one or more mounting points for fibre terminating components.
Clause 34. A fibre routing system according to clause 33, wherein the fibre terminating components are selected from fibre splice connectors, fibre splice protectors, fibre optic couplers, and planar waveguide splitters.
Clause 35. A fibre routing system according to any of clauses 26-33, further comprising a base plate which is adapted to receive an optical fibre from an entry point and is provided with a first conduit to route the optical fibre to a fibre conduit of the tray support member.
Clause 36. A fibre routing system according to clause 35, wherein the base plate further comprises a second conduit to receive an optical fibre from a fibre conduit of the tray support member and to route the received optical fibre to an exit point.
Clause 37. A fibre routing system according to clause 35 or 36, wherein the base plate further comprises a coiled fibre storage area which is at least partly defined by the first conduit and, if present, the second conduit.
Clause 38. A fibre routing system according to clause 37, wherein the tray support member is mounted above the base plate, with the coiled fibre storage area being situated at least partly below the tray support member.
Clause 39. A fibre routing system according to any of clauses 26-38, wherein at least one of the fibre splice trays is provided with means for receiving a communication device.
Clause 40. A fibre routing system according to clause 39, wherein the communication device is an internet of things (IOT) module.
Clause 41. A fibre routing system according to clause 39 or 40, wherein the communication device is received on the underside of the fibre splice tray.
Clause 42. A fibre routing system according to any of clauses 39-41, wherein the communication device is provided with a sensor that communicates with a fibre terminating component, and with wireless communication means for communicating with a remotely located device or system outside the fibre routing system enclosure.
Clause 43. A fibre routing system according to any of clauses 26-43, wherein the enclosure comprises a removable cover, having an internal profile that holds the fibre splice trays in position when the removable cover is fitted.
Clause 44. A fibre routing system according to clause 43, wherein the internal profile comprises a stepped surface defining a space for receiving one or more communication components.
Clause 45. An enclosure for terminating a hybrid power and fibre cable, comprising:
   a) a generally cuboid housing having a pair of end faces and four side faces, the end faces having a smaller area than the side faces;
   b) an entry port in an end face for admitting a hybrid power and fibre cable of the type comprising at least one powered conductor and at least one optical fibre carried in a common sheath;
   c) a longitudinal support mounted in the housing having a generally planar member which runs along the length of the housing away from the end face in which the entry port is located, the generally planar member dividing the interior space of the housing longitudinally into an anterior section and a posterior section;
   d) a fibre routing system mounted in the anterior section for routing an optical fibre, which has been separated out from a hybrid cable received in the entry port, to one of a pluirality of fibre termination components in the anterior section;
   e) an opening in the longitudinal support permitting a powered conductor to pass from the anterior section to the posterior section; and
   f) a plurality of mounting points provided on the posterior side of the generally planar member for securely receiving a plurality of electrical components to be powered by the powered conductor.
Clause 46. An enclosure according to clause 45, wherein said mounting points include a first DIN rail mount and a second DIN rail mount, the first and second DIN rail mounts being adapted to engage with complementary formations on electrical components which may be secured to the rail mounts.
Clause 47. An enclosure according to clause 46, wherein the first rail mount comprises a rail member which is disposed parallel to the generally planar member, and the second rail mount comprises a rail member which is disposed perpendicular to and extending from the generally planar member.
Clause 48. An enclosure according to any of clauses 45-47, wherein the fibre routing system is a fibre routing system according to any of clauses 26-44.
Clause 49. An enclosure according to any of clauses 45-48, further comprising a divider plate as defined in any of clauses 1-25.
Clause 50. An enclosure according to any of clauses 45-49, wherein the housing further comprises an exit port for admitting the same or a different hybrid power and fibre cable.
Clause 51. An enclosure according to any of clauses 45-50, further comprising a communications module, powered by the powered conductor, which receives signals indicative of the state of one or more components within the enclosure, and which communicates via a wireless network with an external device or system.

## Claims

1. A fibre routing structure for routing and terminating optical fibres within an enclosure, the structure comprising:
a) a plurality of fibre routing trays each provided with one or more fibre routing guides which receive and guide a fibre across a surface of the tray from an entry point to an exit point, at least one of the fibre routing trays being provided with a mounting point for a fibre termination component;
b) a tray support member on which each of the fibre routing trays is mounted, the tray support member comprising a plurality of fibre conduits providing routing paths between the fibre routing trays;
wherein the fibre routing trays are mounted on the tray support member in a stacked configuration one above the other;
wherein the fibre routing trays are mounted to the tray support member and extend therefrom in cantilevered fashion;
wherein at least one of the fibre routing trays is hingedly mounted to the tray support member permitting it to be pivoted away from an adjacent underlying tray to reveal and provide access to the adjacent underlying tray and permitting it to be pivoted back to lie parallel to the adjacent underlying tray.

2. A fibre routing structure according to claim 1, wherein when in a working configuration all of the trays are disposed parallel to one another and each tray is successively displaced laterally relative to the next adjacent tray, such that the trays are provided in a stepped configuration.

3. A fibre routing structure according to claim 2, wherein the tray support member comprises a body on which the mounting attachments of the trays are disposed, wherein the mounting attachments are aligned along a plane that lies at an angle of between 20 and 70 degrees relative to the planes of the trays in the working configuration.

4. A fibre routing structure according to claim 3, wherein the tray support member comprises a base that is parallel to the plane of the trays in the working configuration and/or a rear support that is perpendicular to the plane of the trays in a working configuration.

5. A fibre routing system according to any of claims 2-4, wherein each tray above the lowermost tray is hingedly mounted to the tray support, permitting it to be pivoted away from the working configuration to a routing configuration in which a user may access a lower tray to route a fibre thereon.

6. A fibre routing system according to claim 5, wherein the lowermost tray is hingedly mounted to the tray support, permitting it to be pivoted away from the working configuration to a routing configuration in which a user may access a region beneath the lowermost tray.

7. A fibre routing system according to any preceding claim, wherein the uppermost tray is provided with a cover to secure and protect a fibre and any termination components carried on the uppermost tray.

8. A fibre routing system according to any preceding claim, further comprising a base plate which is adapted to receive an optical fibre from an entry point and is provided with a first conduit to route the optical fibre to a fibre conduit of the tray support member.

9. A fibre routing system according to claim 8, wherein the base plate further comprises a second conduit to receive an optical fibre from a fibre conduit of the tray support member and to route the received optical fibre to an exit point.

10. A fibre routing system according to claim 8 or 9, wherein the base plate further comprises a coiled fibre storage area which is at least partly defined by the first conduit and, if present, the second conduit.

11. A fibre routing system according to claim 10, wherein the tray support member is mounted above the base plate, with the coiled fibre storage area being situated at least partly below the tray support member.

12. A fibre routing system according to any preceding claim, wherein at least one of the fibre splice trays is provided with means for receiving a communication device.

13. A fibre routing system according to claim 12, wherein the communication device is received on the underside of the fibre splice tray.

14. A fibre routing system according to any preceding claim, wherein the enclosure comprises a removable cover, having an internal profile that holds the fibre splice trays in position when the removable cover is fitted.

15. A fibre routing system according to claim 14, wherein the internal profile comprises a stepped surface defining a space for receiving one or more communication components.
